# EUROPEAN PATENT APPLICATION

(11) **EP 4 525 398 A1**
(43) Date of publication of application: **19.03.2025**
(21) Application number: 23815248.2
(22) Date of filing: 31.05.2023
(51) Int. Cl.: H04L 45/745, H04L 9/40

(54) **SOURCE ADDRESS VALIDATION METHOD, NETWORK DEVICE AND COMMUNICATION SYSTEM**

(30) Priority: 01.06.2022 CN 202210617693
(71) Applicant: Huawei Technologies Co., Ltd., Shenzhen, Guangdong 518129 (CN)
(72) Inventor: GENG, Nan, Shenzhen, Guangdong 518129 (CN); HUANG, Mingqing, Shenzhen, Guangdong 518129 (CN); ZHUANG, Shunwan, Shenzhen, Guangdong 518129 (CN)
(74) Representative: Gill Jennings & Every LLP
(86) International application number: PCT/CN2023/097409
(87) International publication number: WO 2023/232071

(57) **Abstract**

This application discloses a source address validation method, a network device, and a communication system. A first network device receives a first packet, where the first packet arrives at the first network device through a newly added path on which a second network device serves as a source node and the first network device serves as a destination node, and the first packet includes newly added path information indicating the newly added path. The first network device adds a source address validation SAV rule based on path information and the newly added path information, and the path information includes a reachable path on which the first network device serves as a destination node. In this application, the source node of the newly added path sends the first packet, and the destination node may add the SAV rule after receiving the first packet, and not all network devices need to initiate a probe packet, thereby reducing network overheads and improving efficiency of updating the SAV rule.

## Description

This application claims priority to Chinese Patent Application No. 202210617693.3, filed with the China National Intellectual Property Administration on June 1, 2022 and entitled "SOURCE ADDRESS VALIDATION METHOD, NETWORK DEVICE, AND COMMUNICATION SYSTEM", which is incorporated herein by reference in its entirety.

### TECHNICAL FIELD

Embodiments of this application relate to the field of communication technologies, and in particular, to a source address validation method, a network device, and a communication system.

### BACKGROUND

Source address validation (Source address validation, SAV) is an important method to eliminate source address forgery attacks. Many existing defense schemes are implemented based on source address validation. A basic principle of source address validation is to establish a mapping relationship between a source address and an ingress interface of a network device and check whether a packet sent from the source address arrives through the ingress interface. Considering strong connectivity of the internet, validating ingress interface corresponding to a source address of a packet can detect abnormality of the ingress interface to a great extent and prevent the source address from being forged.

In a distributed source address validation (distributed source address validation, DSAV) protocol, a destination prefix probe (Destination Prefix Probing, DPP) packet carries a sequence number (sequence number), where a larger sequence number indicates a newer packet, and same sequence numbers indicate a same batch of protocol packets. When a routing forwarding table of a network device in a network changes, the network device sends a new DPP packet to a next-hop network device in the network, and a sequence number of the new DPP packet is increased by 1. After receiving the DPP packet with the sequence number increased by 1, another network device updates a local SAV rule based on the DPP packet, and also sends a DPP packet to a next-hop network device of the another network device. A sequence number of the DPP packet is consistent with that of the DPP packet received by the network device. When sequence numbers of DPP packets of all network devices in the network are the same, the current SAV update is converged.

A change of any routing rule in the network causes all the network devices to initiate DPP packet probing, resulting in high network overheads, and lowering efficiency of updating the SAV rule.

### SUMMARY

This application provides a source address validation method, a network device, and a communication system, to improve efficiency of updating an SAV rule by a network device.

According to a first aspect, this application provides a source address validation method. A newly added path exists between a second network device and a first network device, the second network device is a source node of the newly added path, and the first network device is a destination node of the newly added path. The newly added path in this application may be another available path newly added because an original path between the first network device and the second network device is faulty; or may be a path newly added because the second network device additionally configures a newly added static route, a newly added dynamic route, or access control list (access control list, ACL) redirection while maintaining an original path; or may be a newly added path between the second network device and the first network device in another scenario. This is not specifically limited herein.

It should be understood that, in this application, an apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device serves to describe the technical solutions provided in embodiments of this application.

The second network device serves as the source node of the newly added path, and a forwarding rule of the second network device changes. Therefore, the second network device may sense the newly added path. After the forwarding rule changes, the second network device subsequently needs to transfer traffic to the first network device through the newly added path. However, before the first network device updates an SAV rule, if the first network device receives the traffic of the second network device transferred from the newly added path, because an ingress of the traffic to the first network device cannot match the existing SAV rule of the first network device, the traffic is discarded by the first network device, causing a false positive.

To resolve the foregoing false positive, the first network device needs to add an SAV rule for the newly added path, so that the traffic of the second network device can be normally processed by the first network device after arriving at the first network device through the newly added path. Specifically, the second network device transmits a first packet to a next-hop node by using the first network device as a destination node. The first packet arrives at the first network device after being forwarded hop-by-hop on the newly added path, and the first packet includes newly added path information indicating the newly added path.

After receiving the first packet from the newly added path, the first network device obtains the newly added path information indicating the newly added path. The first network device adds a source address validation SAV rule based on path information and the newly added path information, and the path information includes a reachable path on which the first network device serves as a destination node.

In this application, the source node of the newly added path sends the first packet, and the destination node may add the SAV rule after receiving the first packet, and not all network devices need to initiate a probe packet, thereby reducing network overheads and improving efficiency of updating the SAV rule.

Further, because each network device in a network stores its own path information, and the path information indicates a reachable path on which each network device serves as a destination node, in a process of forwarding the first packet, after a relay node on the newly added path receives the first packet, the relay node may also add an SAV rule based on the newly added path information in the first packet and path information of the relay node, so that the subsequent traffic of the second network device can arrive at the relay device on the newly added path. A specific procedure in which the relay node adds the SAV rule is similar to the manner in which the first network device adds the SAV rule in this application. Details are not described herein again.

Based on the first aspect, in a possible implementation, the first network device needs to first obtain local path information. A network device other than the first network device in the network is used as a probe device and sends a probe packet to the first network device. There may be one or more probe devices. This is not limited in this application. Each probe device sends a probe packet, and the probe packet arrives at the first network device through a probe path on which the probe device serves as a source node and the first network device serves as a destination node. The probe packet is transmitted hop-by-hop by network devices on the probe path, and each network device on the probe path records an identifier of the network device on the probe packet in a process of transmitting the probe packet. Therefore, the probe packet received by the first network device includes the identifier of the network device on the probe path through which the probe packet passes. After receiving the probe packet, the first network device may obtain the path information based on the identifier of the network device on the probe path.

It should be noted that the probe packet in this application is a packet used to generate the SAV rule of the network device. In other words, after receiving the probe packet, the first network device may update the SAV rule based on the probe packet. In this case, the first network device may determine the probe path through which the probe packet passes as a reachable path through which traffic of a data plane arrives at the first network device.

In addition to the first network device, another network device (for example, the second network device or a third network device) in the network also needs to generate local path information. A manner in which the another network device obtains the path information is similar to the manner in which the first network device obtains the path information of the first network device. Details are not described herein again.

It should be understood that the path information may be stored in the network device in a content form of a table, or may be stored in the network device in a content form of a directed acyclic graph (directed acyclic graph, DAG), or may be stored in another content form that indicates a reachable path. The content form, a field form, and a storage form of the path information is not limited in this application.

Based on the first aspect, in a possible implementation, the SAV rule of the first network device requires that both a source prefix of the received traffic and an interface path to the first network device can meet conditions, so that the traffic can be normally processed by the first network device. However, in actual application, in addition to the traffic of the second network device as the source node to arrive at the first network device, there is usually traffic of another network device as a source node. A forwarding path of the traffic is that the traffic first passes through the second network device and then arrives at the first network device. The "another network device" is a subsequent device of the second network device.

It is assumed that the first network device adds an SAV rule for the newly added path only by using the second network device as a source prefix, in the newly added SAV rule, the second network device serves as the source prefix. When the traffic of the second network device as the source node is transmitted to the first network device through the newly added path, the traffic may meet both the conditions of the source prefix and the interface path to the first network device in the newly added SAV rule. Therefore, the traffic may be normally processed by the first network device, and is not discarded by the first network device. However, the another network device serves as the subsequent device of the second network device, although a next hop of the another device is limited in a forwarding rule of the another network device, a complete forwarding path is not limited. Therefore, after traffic of the subsequent device to the first network device arrives at the second network device, the second network device determines a next hop of the traffic. If the second network device sends, based on a changed forwarding rule of the second network device, the traffic of the subsequent device to the newly added path, although the traffic may meet the condition of the interface path to the first network device, because a source prefix of the traffic is the subsequent device of the second network device, the traffic cannot match the SAV rule in which the second network device serves as the source prefix. Therefore, the source prefix of the traffic of the subsequent device cannot meet the condition of the newly added SAV rule. As a result, after arriving at the first network device, the traffic cannot be normally processed by the first network device, and is discarded by the first network device, causing a false positive.

It can be learned that the change of the forwarding rule of the second network device affects traffic forwarding of the subsequent device of the second network device. Therefore, to ensure that the traffic of the subsequent device of the second network device as the source node can also be normally processed by the first network device after arriving at the first network device through the newly added path, in this application, after receiving the first packet from the second network device, in addition to adding the SAV rule to the second network device, the first network device needs to find another network device to which an SAV rule needs to be added (that is, an association device of the first packet in this application), and add the SAV rules to the second network device and the association device of the second network device.

After receiving the first packet, the first network device may determine, based on the newly added path information in the first packet, that the source node of the first packet is the second network device, that is, determine that the SAV rule in which the second network device serves as the source prefix and that is for the newly added path needs to be added. For example, if the newly added path information includes the identifier of the network device on the newly added path, the first network device may determine a network device corresponding to a first identifier in the newly added path information as the source node.

Next, after determining that the source node of the first packet is the second network device, the first network device needs to search for the association device of the first packet. Because the first network device stores the path information, the path information includes the reachable path on which the first network device serves as the destination node. Therefore, the first network device may determine the association device of the first packet based on the path information, where a probe packet for which the association device serves as a source node arrives at the first network device after being forwarded by the second network device. In other words, the reachable path of traffic of the association device to the first network device includes the second network device. Therefore, traffic forwarding of the association device is affected by the change of the forwarding rule of the second network device.

Then, the first network device may add the SAV rule in which the second network device serves as the source prefix and an SAV rule in which the association device serves as a source prefix. Therefore, after the traffic of the association device affected by the change of the forwarding rule of the second network device arrives at the first network device through the newly added path, the traffic may be normally processed by the first network device, and is not discarded by the first network device, thereby avoiding the false positive.

Based on the first aspect, in a possible implementation, the newly added path includes a third network device, and the first network device is a next-hop node of the third network device. In other words, the first packet sent by the second network device on the newly added path needs to first arrives at the third network device, and then forwarded by the third network device to the first network device. In this case, the newly added path information in the first packet includes information indicating the third network device (for example, an identifier of the third network device). Therefore, the first network device may determine, based on the information indicating the third network device, that an interface path between the third network device and the first network device on the newly added path needs to be a valid ingress. In this case, the first network device adds a first SAV rule and a second SAV rule. Specifically, a source prefix field of the first SAV rule indicates the second network device, and a valid ingress field of the first SAV rule indicates the interface path between the third network device and the first network device. A source prefix field of the second SAV rule indicates the association device, and a valid ingress field of the second SAV rule indicates the interface path between the third network device and the first network device.

Based on the first aspect, in a possible implementation, the association device of the first packet is directly specified by the second network device. Therefore, in addition to including the newly added path information indicating the newly added path, the first packet sent by the second network device further includes information indicating the association device of the first packet. For example, the information indicating the association device of the first packet may be specified as an identifier of a network device of the association device.

After receiving the first packet, the first network device may determine, based on the newly added path information in the first packet, that the source node of the first packet is the second network device, that is, determine that the SAV rule in which the second network device serves as the source prefix and that is for the newly added path needs to be added. However, the first network device does not need to actively search for the association device of the first packet. The first network device may obtain, from the first packet, the information indicating the association device of the first packet (for example, the identifier of the network device), and then match the information indicating the association device of the first packet with the path information. After matching, if it may be determined that the reachable path of the association device, indicated in the first packet, to the first network device includes the second network device (that is, it is determined that the association device is the subsequent device of the second network device), the first network device determines that the information indicating the association device of the first packet in the first packet is valid.

Next, the first network device may add the SAV rule in which the second network device serves as the source prefix and the SAV rule in which the association device serves as the source prefix. The second network device specifies the association device, so that only a network device permitted by the second network device can send traffic to the first network device through the newly added path, thereby improving network security and improving efficiency of updating the SAV rule.

It should be noted that, if the information indicating the association device of the first packet in the first packet is empty, after receiving the first packet, the first network device may determine that there is no association device associated with the first packet. In this case, the first network device only needs to add the SAV rule in which the second network device serves as the source prefix.

Based on the first aspect, in a possible implementation, when the first network device adds the SAV rule of the newly added path, an SAV rule of an original path is still valid. In this case, a same source prefix corresponds to two different SAV rules. In some scenarios, the SAV rule of the original path needs to be invalid. However, in an existing aging manner, each SAV rule has at least one buffer time before aging. However, before the SAV rule of the original path is aged, if attack traffic and malicious traffic are sent to the first network device through the original path, the attack traffic and the malicious traffic may pass validation of the SAV rule of the original path, thereby affecting network security and causing the false negative.

In this case, after adding the SAV rule, the first network device sends a request packet to a target device, where the target device is a network device indicated by a source prefix field in the newly added SAV rule. Specifically, when the first network device adds the SAV rule in which the second network device serves as the source prefix and the SAV rule in which the association device serves as the source prefix, the second network device and the association device are the foregoing target devices, and the first network device sends request packets to the second network device and the association device.

After receiving the request packets, the second network device and the association device respectively send target probe packets to the first network device, where the target probe packets and the probe packet that is received by the first network and that is used for generating the path information are based on a same protocol, but the second network device and the association device increase sequence numbers of the target probe packets sent to the first network device by 1.

It should be understood that in the SAV rules of the first network device, each SAV rule also has a corresponding sequence number. After receiving the target probe packets, the first network device compares the sequence numbers of the target probe packets with a sequence number of a local SAV rule, to age a target SAV rule. A source prefix of the aged target SAV rule is the same as a source prefix of the target probe packet, and a sequence number of the target SAV rule needs to be less than the sequence number of the target probe packet. Therefore, after adding the new SAV rule, the first network device does not need to wait for a periodic time-consumed aging process of the SAV rule, and the first network device can actively initiate an aging procedure of the SAV rule of the original path, and age the SAV rule of the original path in a timely manner, thereby quickly reducing false negative cases and improving network security. This is applicable to a scenario in which a requirement on network security is high.

Based on the first aspect, in a possible implementation, the path information indicates the reachable path on which the first network device serves as the destination node, and the first network device needs to add the SAV rule by using the path information as a basis. Since the first network device needs to add the SAV rule, it indicates that the reachable path on which the first network device serves as the destination node also changes. Therefore, the first network device needs to update the path information based on the newly added path information, so that updated path information is still used as a basis for adding the SAV rule, thereby improving efficiency of updating the SAV rule.

It should be noted that after receiving the first packet, the first network device may first update the path information based on the newly added path information, and then add the SAV rule; or after receiving the first packet, the first network device may first add the SAV rule, and then update the path information based on the newly added path information. This is not limited in this application.

Based on the first aspect, in a possible implementation, the probe packet may be a DPP packet in a DSAV protocol, and correspondingly, the probe path through which the probe packet arrives at the first network device is a DPP path. Alternatively, the probe packet may be another type of packet used to generate the SAV rule. A format type of the probe packet is not limited in this application.

Based on the first aspect, in a possible implementation, the newly added path information includes the identifier of the network device on the newly added path. Specifically, each network device (for example, the first network device and the second network device) on the newly added path records an identifier of the network device on the first packet in a process of transmitting the first packet. Therefore, after receiving the first packet, the first network device may obtain the identifier of the network device on the newly added path from the first packet. The first network device may determine the newly added path (that is, a forwarding path through which the first packet passes) based on the identifier of the network device on the newly added path, and add the SAV rule for the newly added path.

According to a second aspect, this application provides a source address validation method. A second network device sends a first packet to a first network device, where the first packet arrives at the first network device through a newly added path on which the second network device serves as a source node and the first network device serves as a destination node, the first packet includes newly added path information indicating the newly added path, the newly added path information indicates the first network device to add a source address validation SAV rule based on path information and the newly added path information, and the path information includes a reachable path on which the first network device serves as a destination node.

Based on the second aspect, in a possible implementation, before the second network device sends the first packet to the first network device, the method further includes:

The second network device probes that the newly added path is added between the second network device and the first network device.

Based on the second aspect, in a possible implementation, before the second network device sends the first packet to the first network device, the method further includes:

The second network device may periodically send the first packet to the first network device, that is, the second network device periodically sends the first packet to the first network device at an interval of preset time.

Based on the second aspect, in a possible implementation, before the second network device sends the first packet to the first network device, the method further includes:

The second network device serves as a probe device, and sends a probe packet to the first network device. The probe packet sent by the second network device arrives at the first network device through a probe path on which the second network device serves as a source node and the first network device serves as a destination node. Because the probe packet includes an identifier of a network device on the probe path of the probe packet, the first network device may obtain the path information based on the identifier of the network device on the probe path. The path information obtained by the first network device for the probe packet of the second network device indicates a reachable path of traffic of the second network device to the first network device.

Based on the second aspect, in a possible implementation, after the second network device sends the first packet to the first network device, the method further includes:

The second network device receives a request packet from the first network device; and
the second network device sends a target probe packet to the first network device based on the request packet, where the target probe packet is used by the first network device to age a target SAV rule based on the target probe packet, and a sequence number of the target SAV rule is less than a sequence number of the target probe packet.

Based on the second aspect, in a possible implementation, the probe packet is a destination prefix probe DPP packet, and the probe path is a DPP path.

Based on the second aspect, in a possible implementation, the newly added path information includes an identifier of a network device on the newly added path.

Content such as information exchange and an execution process of the embodiment shown in this aspect is based on a same concept as the embodiment shown in the first aspect. Therefore, for a description of beneficial effect shown in this aspect, refer to the first aspect. Details are not described herein again.

According to a third aspect, this application provides a first network device, and the first network device includes:
a transceiver unit, configured to receive a first packet, where the first packet arrives at the first network device through a newly added path on which a second network device serves as a source node and the first network device serves as a destination node, and the first packet includes newly added path information indicating the newly added path; and
a processing unit, configured to add a source address validation SAV rule based on path information and the newly added path information, where the path information includes a reachable path on which the first network device serves as a destination node.

Based on the third aspect, in a possible implementation,
the transceiver unit is further configured to receive a probe packet, where the probe packet arrives at the first network device through a probe path on which a probe device serves as a source node and the first network device serves as a destination node, and the probe packet includes an identifier of a network device on the probe path; and
the processing unit is further configured to obtain the path information based on the identifier of the network device on the probe path.

Based on the third aspect, in a possible implementation, the processing unit is specifically configured to:
determine, based on the newly added path information, that the source node of the first packet is the second network device;
determine an association device of the first packet based on the path information, where a probe packet for which the association device serves as a source node arrives at the first network device after being forwarded by the second network device; and
add an SAV rule in which the second network device serves as a source prefix and an SAV rule in which the association device serves as a source prefix.

Based on the third aspect, in a possible implementation, the newly added path includes a third network device, the first network device is a next-hop node of the third network device, and the processing unit is specifically configured to:
add a first SAV rule and a second SAV rule, where a source prefix field of the first SAV rule indicates the second network device, a valid ingress field of the first SAV rule indicates an interface path between the third network device and the first network device, a source prefix field of the second SAV rule indicates the association device, and a valid ingress field of the second SAV rule indicates an interface path between the third network device and the first network device.

Based on the third aspect, in a possible implementation, the first packet further includes information indicating an association device of the first packet, and the processing unit is specifically configured to:
determine, based on the newly added path information, that the source node of the first packet is the second network device;
determine the association device based on the information indicating the association device of the first packet and the path information; and
add an SAV rule in which the second network device serves as a source prefix and an SAV rule in which the association device serves as a source prefix.

Based on the third aspect, in a possible implementation,
the transceiver unit is further configured to: send a request packet to a target device, where the target device is a network device indicated by a source prefix field in a newly added SAV rule, and receive a target probe packet from the target device; and
the processing unit is further configured to age a target SAV rule based on the target probe packet, where a sequence number of the target SAV rule is less than a sequence number of the target probe packet.

Based on the third aspect, in a possible implementation, the processing unit is further configured to:
update the path information based on the newly added path information.

Based on the third aspect, in a possible implementation, the probe packet is a destination prefix probe DPP packet, and the probe path is a DPP path.

Based on the third aspect, in a possible implementation, the newly added path information includes an identifier of a network device on the newly added path, and the processing unit is specifically configured to:
add the source address validation SAV rule based on the identifier of the network device on the newly added path and the path information.

Content such as information exchange and an execution process of the embodiment shown in this aspect is based on a same concept as the embodiment shown in the first aspect. Therefore, for a description of beneficial effect shown in this aspect, refer to the first aspect. Details are not described herein again.

According to a fourth aspect, this application provides a second network device, and the second network device includes:
a transceiver unit, configured to send a first packet to a first network device, where the first packet arrives at the first network device through a newly added path on which the second network device serves as a source node and the first network device serves as a destination node, the first packet includes newly added path information indicating the newly added path, the newly added path information indicates the first network device to add a source address validation SAV rule based on path information and the newly added path information, and the path information includes a reachable path on which the first network device serves as a destination node.

Based on the fourth aspect, in a possible implementation, the second network device further includes:
a processing unit, configured to probe that the newly added path is added between the second network device and the first network device.

Based on the fourth aspect, in a possible implementation, the second network device further includes:
a processing unit, configured to send the first packet to the first network device at an interval of preset time.

Based on the fourth aspect, in a possible implementation, the second network device further includes:
a processing unit, configured to send a probe packet to the first network device, where the probe packet arrives at the first network device through a probe path on which the second network device serves as a source node and the first network device serves as a destination node, the probe packet includes an identifier of a network device on the probe path, and the probe packet is used by the first network device to obtain the path information based on the identifier of the network device on the probe path.

Based on the fourth aspect, in a possible implementation, the second network device further includes the processing unit;
the transceiver unit is further configured to receive a request packet from the first network device; and
the processing unit is configured to send a target probe packet to the first network device based on the request packet, where the target probe packet is used by the first network device to age a target SAV rule based on the target probe packet, and a sequence number of the target SAV rule is less than a sequence number of the target probe packet.

Based on the fourth aspect, in a possible implementation, the probe packet is a destination prefix probe DPP packet, and the probe path is a DPP path.

Based on the fourth aspect, in a possible implementation, the newly added path information includes an identifier of a network device on the newly added path.

According to a fifth aspect, a network device is provided, including a memory and a processor coupled to the memory. The memory is configured to store instructions, and the processor is configured to execute the instructions to implement the method in any one of the foregoing aspects.

According to a sixth aspect, a network device is provided, including a communication interface and a processor coupled to the communication interface. The communication interface is configured to perform a receiving or sending related operation in any one of the methods in any one of the foregoing aspects, and the processor is configured to perform a processing related operation in any one of the methods in any one of the foregoing aspects.

According to a seventh aspect, a computer-readable storage medium is provided. The computer-readable storage medium stores a computer program. When the computer program is run on a processor, the method in the first aspect is implemented.

According to an eighth aspect, a computer program product or a computer program is provided. The computer program product or the computer program includes computer instructions, and when the computer instructions are run on a processor, the method in any one of the foregoing aspects is implemented.

According to a ninth aspect, an embodiment of this application provides a chip system. The chip system includes a processor, configured to implement functions in the foregoing aspects, for example, sending or processing of data and/or information in the foregoing methods. In a possible design, the chip system further includes a memory. The memory is configured to store program instructions and data that are necessary for a server or a communication device. The chip system may include a chip, or may include a chip and another discrete component.

According to a tenth aspect, an embodiment of this application provides a communication system. The communication system includes the first network device in the third aspect and the second network device in the fourth aspect. The communication system is configured to implement the source address validation method in any one of the first aspect and the second aspect.

According to the foregoing technical solutions, it can be learned that embodiments of this application have the following advantages:

This application discloses the source address validation method, the network device, and the communication system. The first network device receives the first packet, where the first packet arrives at the first network device through the newly added path on which the second network device serves as the source node and the first network device serves as the destination node, and the first packet includes the newly added path information indicating the newly added path. The first network device adds the source address validation SAV rule based on the path information and the newly added path information, and the path information includes the reachable path on which the first network device serves as the destination node. In this application, the source node of the newly added path sends the first packet, and the destination node may add the SAV rule after receiving the first packet, and not all the network devices need to initiate the probe packet, thereby reducing network overheads and improving efficiency of updating the SAV rule.

### BRIEF DESCRIPTION OF DRAWINGS

To describe the technical solutions in embodiments of this application or in the conventional technology more clearly, the following briefly introduces the accompanying drawings used for describing embodiments or the prior art. It is clearly that the accompanying drawings in the following description show merely embodiments of this application, and a person of ordinary skill in the art may still derive other drawings from these accompanying drawings without creative efforts.
FIG. 1 is a diagram of a working principle of source address validation;
FIG. 2 is a schematic flowchart of a configuration of a distributed source address validation table;
FIG. 3 is a schematic flowchart of another configuration of a distributed source address validation table;
FIG. 4 is a diagram of a configuration result of a distributed source address validation table;
FIG. 5 is a diagram of a scenario of a source prefix advertisement process;
FIG. 6 is a diagram of a scenario of a destination prefix probing process;
FIG. 7 is a diagram of factors that trigger a source prefix advertisement process and a destination prefix probing process;
FIG. 8 is a diagram of a scenario in which a forwarding path changes resulting from a newly added static route configured by a network device;
FIG. 9 is a diagram of a scenario in which a forwarding path changes resulting from modification of a cost value of a routing protocol;
FIG. 10 is a schematic flowchart of a source address validation method according to an embodiment of this application;
FIG. 11 is an example diagram of a possible network topology according to this application;
FIG. 12 is a diagram of another content form of path information in a node F according to this application;
FIG. 13 is a diagram of updating path information by a node F according to this application;
FIG. 14 is another diagram of updating path information by a node F according to this application;
FIG. 15 is a diagram of a structure of a first network device according to an embodiment of this application;
FIG. 16 is a diagram of a structure of a second network device according to an embodiment of this application;
FIG. 17 is a diagram of a structure of a network device according to an embodiment of this application; and
FIG. 18 is a diagram of another structure of a network device according to an embodiment of this application.

### DESCRIPTION OF EMBODIMENTS

Embodiments of this application provide a source address validation method, a network device, and a communication system, to improve efficiency of updating an SAV rule by a network device.

The following describes embodiments of the present invention with reference to the accompanying drawings in embodiments of the present invention. Terms used in implementations of the present invention are merely intended to explain specific embodiments of the present invention, and are not intended to limit the present invention. A person of ordinary skill in the art may learn that, with development of technologies and emergence of a new scenario, the technical solutions provided in embodiments of this application are also applicable to a similar technical problem.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In the specification, claims, and accompanying drawings of the present invention, the terms "first", "second", "third", "fourth", and so on (if any) are intended to distinguish between similar objects but do not necessarily indicate a specific order or sequence. It should be understood that the data termed in such a way are interchangeable in proper circumstances so that embodiments of the present invention described herein can be implemented in orders except the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Source address validation (Source address validation, SAV) is an important method to eliminate source address forgery attacks. Many existing defense schemes are implemented based on source address validation. A basic principle of source address validation is to establish a mapping relationship between a source address and an ingress interface of a network device and check whether a packet sent from the source address arrives through the ingress interface. Considering strong connectivity of the internet, validating an ingress interface corresponding to a source address of a packet can detect abnormality of the ingress interface to a great extent and prevent the source address from being forged.

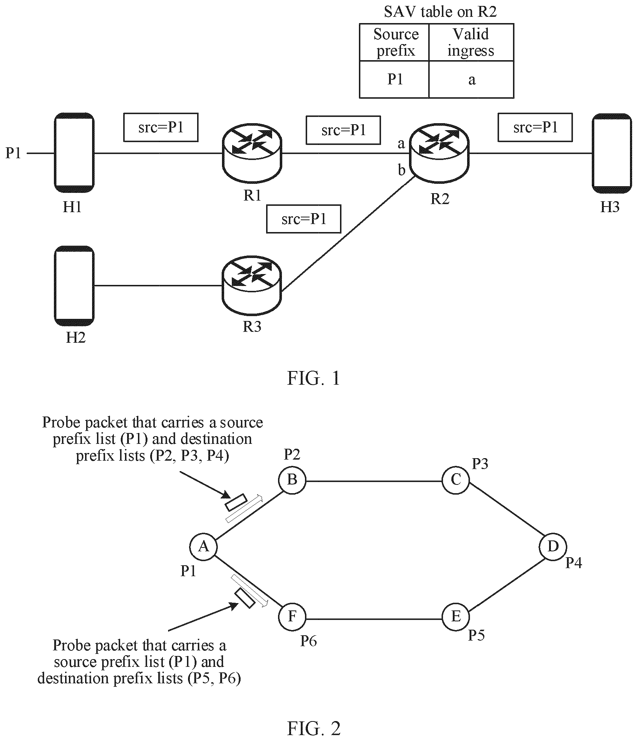

FIG. 1 is a diagram of a working principle of source address validation. As shown in FIG. 1, an SAV table is stored on a device R2, where the SAV table includes at least one SAV rule, and the SAV rule indicates that a valid ingress through which a packet having a source prefix P1 arrives at the device R2 is an interface a. In other words, if the packet wants to pass through the device R2, the source prefix of the packet needs to be P1 and the packet arrives at the device R2 through the interface a. If the two conditions cannot be met at the same time, the packet is discarded by the device R2. In FIG. 1, a device H1 is a legal holder of the source prefix P1, and according to the SAV rule on the device R2 shown in FIG. 1, a packet sent by the device H1 to a device H3 may be successfully forwarded by the device R2. In addition, if a device H2 sends a packet with a forged source address P1, the packet with the forged source address is forwarded by a device R3 and then arrives at an interface b of the device R2. Therefore, the packet with the forged source address cannot match the SAV rule on the device R2, and the packet is discarded by the device R2.

Before the foregoing source address validation procedure is performed, each network device needs to be configured with a local SAV rule. To generate an accurate SAV rule, the network device needs to accurately know an interface through which a packet that carries a valid source address arrives. In an actual network, a forwarding rule is complex. Currently, a valid ingress interface of a valid source prefix is obtained mainly through destination prefix probing. Specifically, a probe packet is sent to each probe destination node (equivalent to initiating a probe procedure) by using each network device in the network as a probe initial node and another network device in the network as a probe destination node. A relay node through which the probe packet passes records source prefix information of the initial node and a valid ingress interface of the probe packet. After the probe packet arrives at the probe destination node, the probe destination node generates the SAV rule based on the probe packet. In terms of accuracy, deployability, and scalability, a distributed source address validation table generation protocol (distributed SAV, DSAV) is a suitable solution in a current intra-domain scenario.

The following describes a DSAV procedure.
1. A probe packet is sent to another network device by using each network device (for example, a router or a switch) as a probe initial node and the another network device in a network as a probe destination node. The probe packet needs to carry a source prefix list of the probe initial node to which the probe packet belongs, where the source prefix list is used to support a relay node and the probe destination node in generating an SAV rule, and source prefix lists of probe packets sent by the probe initial node to probe destination nodes are consistent. In addition, the probe packet further carries an egress reachable destination prefix list, where the egress reachable destination prefix list includes information that is of all egress reachable destination prefixes whose next hops are corresponding probe egresses and that is known by the probe initial node (the information is obtained according to a local routing forwarding rule), and the egress reachable destination prefix list is used to indicate a destination prefix probe path of the probe packet. Therefore, the probe packet includes the source prefix list and the egress reachable destination prefix list.
2. After receiving the probe packet, the relay node generates a local SAV rule based on the source prefix list in the probe packet and an ingress interface through which the probe packet arrives at the relay node, that is, <the source prefix, the valid ingress interface>. In addition, the relay node further determines a next probe egress of the probe packet based on the egress reachable destination prefix list in the probe packet, and continues to relay a received probe packet. An egress reachable destination prefix list of the relayed probe packet needs to be updated based on local routing forwarding information of the relay node, that is, it is ensured that a forwarding next hop of a destination prefix in the egress reachable destination prefix list is a corresponding probe egress.
3. The probe packet is continuously forwarded hop-by-hop by relay nodes, to complete destination prefix probing until the probe packet arrives at nodes that are of all reachable destination prefixes and that are known by the probe initial node. In this case, all relay nodes in the network generate source address validation information for the probe initial node.
4. Any network device having a valid source prefix in the network may be used as the probe initial node to send the probe packet, so that another relay node generates source address validation information for the probe initial node.

FIG. 2 is a schematic flowchart of a configuration of a distributed source address validation table. As shown in FIG. 2, an example in which a node A is a probe initial node is used, and other nodes (a node B, a node C, a node D, a node E, and a node F) are relay nodes. The node A has a valid source prefix P1, and the node A has reachable routes to P2, P3, P4, P5, and P6. As shown in FIG. 2, the node A sends probe packets to two probe egresses (P2 and P6), where both local originating valid source prefix lists of the probe packets are [P1], and egress reachable destination prefix lists are determined according to a forwarding rule (for example, a shortest path forwarding rule). To be specific, when a next hop of the node A to P2, P3, and P4 is the node B, egress reachable destination prefix lists of the probe packet sent by the node A to the node B are [P2, P3, P4]. Similarly, when a next hop of the node A to P5 and P6 is the node F, egress reachable destination prefix lists of the probe packet sent by the node A to the node C are [P6, P5].

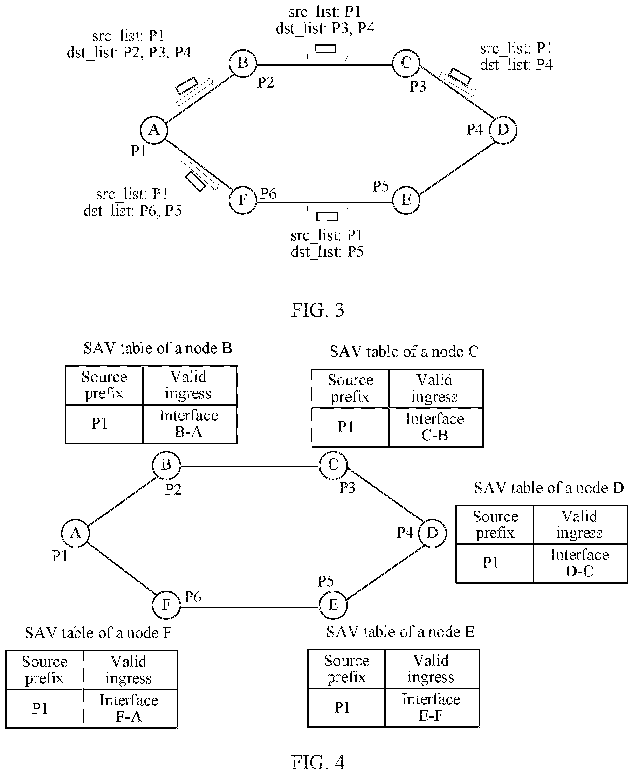

FIG. 3 is a schematic flowchart of another configuration of a distributed source address validation table. As shown in FIG. 3, a relay node B receives a probe packet sent by a node A, and the node B generates an SAV rule based on a source prefix list in the probe packet and an ingress interface through which the probe packet arrives at the node B. Then, the node B continues to relay the probe packet based on information of an egress reachable destination prefix list of the received probe packet. Specifically, the node B determines, based on an egress reachable destination prefix list [P2, P3, P4], that a probe egress of the node B is an interface B-C, and then determines, with reference to information of a next-hop of the node B, that an egress reachable destination prefix list of the probe packet to the node E is [P3, P4]. By analogy, an egress reachable destination prefix list of the probe packet to the node D is [P4]. An operation performed by a relay node F after receiving the probe packet from the node A is similar to that performed by the node B, and is not described herein again. The probe packet completes destination prefix probing in the hop-by-hop manner.

FIG. 4 is a diagram of a configuration result of a distributed source address validation table. As shown in FIG. 4, in a current destination prefix probing procedure in which a node A is used as a probe initial node, a node B, a node C, a node D, a node E, and a node F are used as forwarding nodes of a probe packet, and need to generate SAV rules based on a source prefix list in the probe packet and ingress interfaces through which the probe packet arrives at the devices, and put the SAV rules into SAV tables of a data plane. In this case, a DSAV process for the node A ends.

It can be learned from the foregoing that the probe packet sent by the probe initial node carries the source prefix list and the egress reachable destination prefix list. The egress reachable destination prefix list is used to guide path probing, and the source prefix list is used to generate the source address validation rule based on a destination prefix probing result. In an actual scenario, a network device may have very large quantities of source prefixes and destination prefixes. Compared with a source prefix probing process, in the destination prefix probing process, network overheads caused by the probe initial node for initiating once destination prefix probing are high. Therefore, such the destination prefix probing process needs to be avoided as much as possible. Therefore, in a manner of putting both the source prefix list and the egress reachable destination prefix list of the probe initial node into the probe packet brings many unnecessary probe and network overheads. This is because when any piece of prefix information or any routing rule in the network device changes, destination prefix probing needs to be performed once. Even if the source prefix list or the destination prefix list does not change, the probe packet sent by the network device also needs to carry full prefix information (that is, the probe packet includes the source prefix list and the egress reachable destination prefix list). This may cause many unnecessary network overheads.

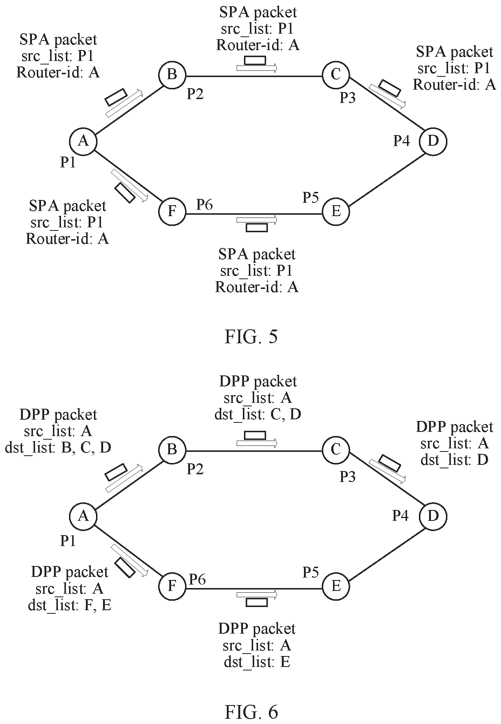

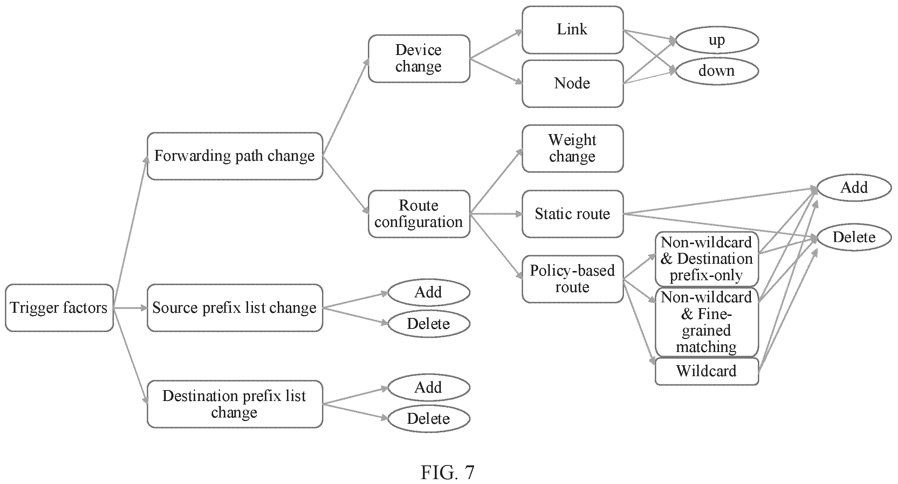

To resolve this problem, the DSAV procedure can be split into a source prefix advertisement (source prefix advertisement, SPA) process and a destination prefix probing (destination prefix probing, DPP) process, to reduce network bandwidth occupation and improve efficiency of updating the SAV rule.
1. The probe initial node may obtain a local source prefix list and an identifier of the device (for example, a router-id), and establish a mapping relationship between the source prefix list and the router-id. Then, the source prefix advertisement process is performed. FIG. 5 is a diagram of a scenario of the source prefix advertisement process. As shown in FIG. 5, in the source prefix advertisement process, the probe initial node (for example, a node A) may advertise the source prefix list and the router-id to another network device through flooding or by using another protocol mechanism.
2. After receiving the source prefix list and the router-id from the probe initial node, the another network device stores the source prefix list and the router-id.
3. FIG. 6 is a diagram of a scenario of the destination prefix probing process. As shown in FIG. 6, the probe initial node (for example, a node A) initiates a probe packet in the destination prefix probing process, and a relay node relays the probe packet. However, the probe packet does not need to carry a long source prefix list (that is, all entries in the source prefix list of the probe initial node), but replaces the source prefix list with the router-id of the probe initial node. Because each relay node stores a mapping relationship between the router-id of the probe initial node and the source prefix list, when receiving the probe packet, the relay node may still find the source prefix list corresponding to the router-id in the probe packet according to the mapping relationship.
4. Similar to establishing the mapping relationship between the source prefix list and the router-id, a destination prefix in the egress reachable destination prefix list may also establish a mapping relationship with the router-id. Generally, a source prefix of a device X is symmetric to a reachable destination prefix of another device to the device X. In other words, the source prefix of the device X is also an external reachable destination prefix. Therefore, the device X only needs to advertise the source prefix list, and information of the advertisement may be directly used in cost control of the egress reachable destination prefix list later.
5. When content of a source prefix list of a network device changes, the network device serves as a probe initial node, and only needs to re-advertise the source prefix list and a router-id again. When a reachable destination prefix or a forwarding rule changes, the DPP process needs to be performed again. FIG. 7 is a diagram of factors that trigger the source prefix advertisement process and the destination prefix probing process. As shown in FIG. 7, a DSAV process (including the SPA process and the DPP process) needs to be performed after a network environment changes (for example, a forwarding path change, a source prefix list change, or a destination prefix list change in FIG. 7), to complete re-convergence of an SAV protocol.

When the forwarding rule or the forwarding path changes, a re-convergence process of the SAV protocol is complex. If re-convergence of the SAV protocol is slow, false positive or false negative problems may occur during traffic transferring. The following describes the false positive and the false negative with reference to FIG. 5.

False positive: For example, as shown in FIG. 5, an SAV rule learned by a node B is that a packet with a source prefix P1 needs to arrive at the node B through an interface B-A. If a forwarding rule changes at a specific moment, that is, a path of traffic from the node A to the node B changes to A->C->D->B, traffic with the source prefix P1 arrives at the node B through an interface B-D. If a DSAV protocol does not initiate DPP probing in a timely manner, the node B cannot update the SAV rule in a timely manner. As a result, the traffic arriving through the node B-D is discarded by mistake. This is the false positive.

False negative: When a forwarding rule changes, a path of traffic from the node A to a node B changes to A->C->D->B. Therefore, before convergence of the DSAV, a valid interface B-A indicated by an SAV rule of the node B needs to be actually invalidated. If this rule is not deleted, when attack traffic exactly enters the node B through the interface B-A, the traffic may be considered as valid traffic and is permitted by mistake. This is the false negative.

The false positive affects normal forwarding of valid traffic, which directly affects services. The false negative may bypass some invalid traffic, which may affect network security. Therefore, the SAV rule needs to be updated as quickly as possible to eliminate the false positive and reduce the false negative as much as possible.

Therefore, in the DSAV protocol, an SPA packet and a DPP packet may carry a sequence number (sequence number). A larger sequence number indicates a newer packet, and a same sequence number indicates a same batch of protocol packets. When a routing forwarding table of a network device in a network changes, the network device sends a new DPP packet to a next-hop network device in the network, and a sequence number of the new DPP packet is increased by 1. After receiving the DPP packet with the sequence number increased by 1, another network device updates a local SAV rule based on the DPP packet, and also sends a DPP packet to a next-hop network device of the another network device. A sequence number of the DPP packet is consistent with that of the DPP packet received by the network device. When sequence numbers of DPP packets of all network devices in the network are the same, the current SAV update is converged.

It can be learned that a change of any routing rule in the network causes all the network devices to initiate DPP packet probing, so that network overheads are high. In view of this, embodiments of this application disclose a source address validation method, a network device, and a communication system, to reduce network bandwidth occupation and improve efficiency of updating an SAV rule.

With reference to the accompanying drawings, the following describes an application scenario of the source address validation method in this application by using an example.

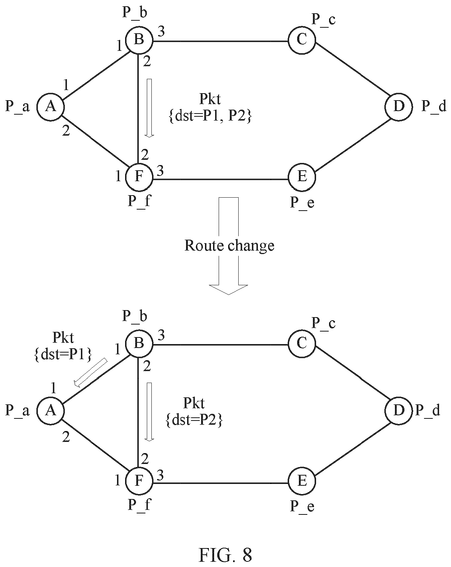

FIG. 8 is a diagram of a scenario in which a forwarding path changes resulting from a newly added static route configured by a network device. As shown in FIG. 8, before a route changes, a next hop of a node B from which a packet is sent to a port P1 and a port P2 of a node F is the node F. In this case, a static route (that is, after the route changes) is configured on the node B, and traffic to the port P1 of the node F is sent to a node A, that is, the traffic arrives at the port P1 of the node F through a path B-A-F.

In this case, for source prefixes of the node B and a node that is relayed by the node B, valid ingress interfaces of the source prefixes on the node F are not only an interface F-B, but also an interface F-A. If the interface 1 cannot be probed and an SAV rule on the node F cannot be modified in a timely manner, valid traffic may be discarded when arriving at the node F through B-A-F, causing a false positive.

In another example, in a network, a cost value of an interior gateway protocol (interior gateway protocols, IGP) may be modified to perform route adjustment. In a cost value-based adjustment scenario, a cost value of one link of one router is changed, cost values of a plurality of links of one router are changed, and cost values of a plurality of links of a plurality of routers are adjusted.

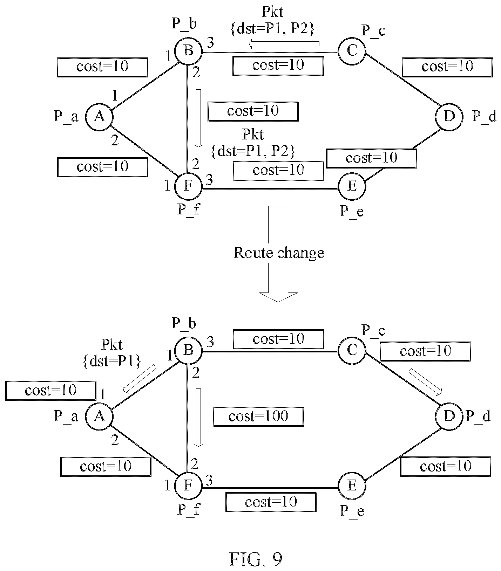

FIG. 9 is a diagram of a scenario in which a forwarding path changes resulting from modification of a cost value of a routing protocol. As shown in FIG. 9, a cost value of a link B-F is modified in a network. Although only one cost value is modified, routes of a plurality of devices may be affected. In the figure, a path from a node B to a node F changes to B-A-F, and a path from a node C to the node F changes to C-D-E-F.

For a local originating source prefix (P_b) of the node B, a valid ingress interface of the source prefix on the node F is only an interface F-A. This is because there is no traffic sent by the node B to the node F on the path B-F. For a local originating source prefix (P_c) of the node C, a valid ingress interface of the source prefix on the node F is only an interface F-E.

Therefore, the DSAV protocol needs to find the change of the valid ingress interface in a timely manner, to avoid a false positive. In addition, the interface F-B is no longer the valid ingress interface of the node F. If the interface F-B is not deleted in a timely manner, the false negative is caused.

With reference to the scenario examples in FIG. 8 and FIG. 9, it should be noted that the source address validation method in this application is applicable to a scenario in which a forwarding path is newly added between network devices shown in FIG. 7, including but not limited to: a link switching (that is, another available link is added) scenario caused by a link fault between network devices, a scenario in which a newly added static route is configured, a scenario in which a newly added dynamic route is added, or an access control list (access control list, ACL) redirection scenario; or may alternatively be another scenario in which a forwarding path is newly added. This is not specifically limited herein.

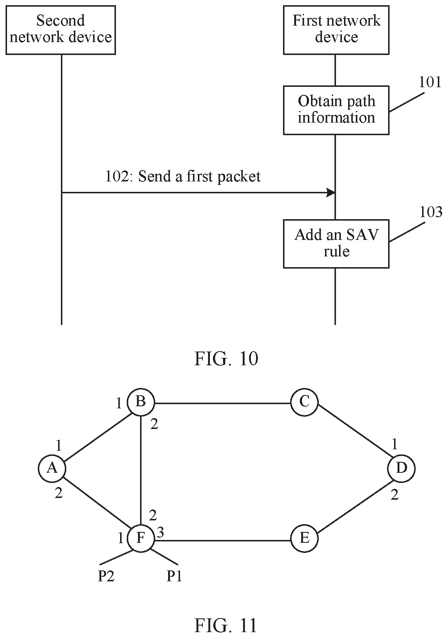

In the source address validation method in this application, the second network device is a source node of the newly added path, and the first network device is a destination node of the newly added path for description. FIG. 10 is a schematic flowchart of a source address validation method according to an embodiment of this application. As shown in FIG. 10, the source address validation method in this embodiment of this application includes the following steps.

101: A first network device generates path information.

The first network device needs to first obtain local path information. The path information of the first network device includes a reachable path on which the first network device serves as a destination node, and the reachable path is a path through which traffic sent by another network device (for example, a second network device) can arrive at the first network device under validation based on an SAV rule stored by the first network device.

The network device in this application may be an access network device. The access network device may also be referred to as a radio access network (radio access network, RAN) device, and is a device that provides a wireless communication function for a terminal device. The access network device includes, for example, but is not limited to, a next generation NodeB (generation NodeB, gNB), an evolved NodeB (evolved NodeB, eNB), a baseband unit (baseband unit, BBU), a transmission reception point (transmitting and receiving point, TRP), a transmission point (transmitting point, TP), a base station in a future mobile communication system, or an access point in a wireless local area network (wireless local area network, WLAN) system. Alternatively, the access network device may be a radio controller, a central unit (central unit, CU), and/or a distributed unit (distributed unit, DU) in a cloud radio access network (cloud radio access network, CRAN) scenario, or the network device may be a relay station, a network device in a vehicle-mounted device, or the like.

In embodiments of this application, an apparatus configured to implement a function of the network device may be the network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used to describe the technical solutions provided in embodiments of this application.

The following describes a manner in which the first network device obtains the path information.

A network device other than the first network device in a network is used as a probe device and sends a probe packet to the first network device. There may be one or more probe devices. This is not limited in this application. Each probe device sends a probe packet, and the probe packet arrives at the first network device through a probe path on which the probe device serves as a source node and the first network device serves as a destination node. The probe packet is transmitted hop-by-hop by network devices on the probe path, and each network device on the probe path records an identifier of the network device on the probe packet in a process of transmitting the probe packet. Therefore, the probe packet received by the first network device includes the identifier of the network device on the probe path through which the probe packet passes. After receiving the probe packet, the first network device may obtain the path information based on the identifier of the network device on the probe path.

It should be noted that the probe packet in this application is a packet used to generate the SAV rule of the network device. In other words, after receiving the probe packet, the first network device may update the SAV rule based on the probe packet. In this case, the first network device may determine the probe path through which the probe packet passes as a reachable path through which traffic of a data plane arrives at the first network device.

In a possible implementation, the second network device serves as a probe device and sends a probe packet to the first network device. The probe packet sent by the second network device arrives at the first network device through a probe path on which the second network device serves as a source node and the first network device serves as a destination node. Because the probe packet includes an identifier of a network device on the probe path of the probe packet, the first network device may obtain the path information based on the identifier of the network device on the probe path. The path information obtained by the first network device for the probe packet of the second network device indicates a reachable path of traffic of the second network device to the first network device.

In a possible implementation, the probe packet may be a DPP packet in a DSAV protocol, and correspondingly, the probe path through which the probe packet arrives at the first network device is a DPP path. Alternatively, the probe packet may be another type of packet used to generate the SAV rule. A format type of the probe packet is not limited in this application.

FIG. 11 is an example diagram of a possible network topology according to this application. For ease of description, an example in which a node B and a node C respectively initiate probe packets to a node F is used herein for description. As shown in FIG. 11, it is assumed that a probe path of the probe packet sent by the node B as a source node to the node F (a destination node) is: B->F, and a probe path of the probe packet sent by the node C as a source node to the node F (a destination node) is: C->B->F. In this case, a valid ingress interface of traffic of the node B and traffic of the node C to the node F is an interface 2 (that is, an interface F-B) of the node F. It can be learned from the foregoing that the probe packet includes an identifier of a network device on the probe path through which the probe packet passes. Therefore, the probe packet received by the node F from the node B includes identifiers (B, F) of the node B and the node F, and the probe packet received by the node F from the node C includes identifiers (C, B, F) of the node C, the node B, and the node F. The node F may determine, based on the identifiers (B, F) in the probe packet of the node B, that a reachable path through which the traffic of the node B arrives at the node F is B->F, and the node F may determine, based on the identifiers (C, B, F) in the probe packet of the node C, that a reachable path through which the traffic of the node C arrives at the node F is C->B->F.

After receiving the probe packets from the node B and the node C, the node F generates path information. The following describes a content form of the path information in this application by using an example.

Table 1 is a content form of the path information in the node F in this application.

**Table 1**

| Path information in a node F | | |
|---|---|---|
| Source node | Identifier of a probe packet | Reachable path |
| Node B | (B, F) | B->F |
| Node C | (C, B, F) | C->B->F |

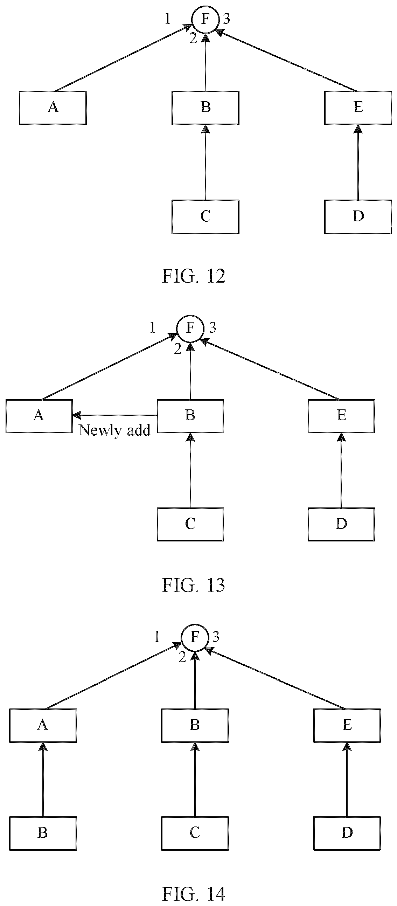

FIG. 12 is a diagram of another content form of the path information in the node F according to this application. As shown in FIG. 12, the path information in the node F is stored in a content form of a directed acyclic graph (directed acyclic graph, DAG). Specifically, in the DAG, the node F is used as a root node, and a node A, a node B, a node C, a node D, and a node E are child nodes. Because a probe packet sent by the node C arrives at the node F after passing through the node B, for ease of description, the node C may be used as a next-level child node of the node B. Similarly, the node D is used as a next-level child node of the node E.

It can be learned from the foregoing that the path information of the first network device includes the reachable path on which the first network device serves as the destination node. It should be noted that the path information may be stored in the first network device in a content form of a table, or may be stored in the first network device in a content form of a DAG, or may be stored in another content form that indicates a reachable path. The content form, a field form, and a storage form of the path information is not limited in this application.

In this application, in addition to the first network device, another network device (for example, the second network device or a third network device) in the network also needs to generate local path information. A manner in which the another network device obtains the path information is similar to the manner in which the first network device obtains the path information of the first network device. Details are not described herein again.

102: The second network device sends a first packet to the first network device through a newly added path.

The newly added path exists between the second network device and the first network device, the second network device is a source node of the newly added path, and the first network device is a destination node of the newly added path. The newly added path in this application may be another available path newly added because an original path between the first network device and the second network device is faulty; or may be a path newly added because the second network device additionally configures a newly added static route, a newly added dynamic route, or ACL redirection while maintaining an original path; or may be a newly added path between the second network device and the first network device in another scenario. This is not specifically limited herein.

The second network device serves as the source node of the newly added path, and a forwarding rule of the second network device changes. Therefore, the second network device may sense the newly added path. After the forwarding rule changes, the second network device subsequently needs to transfer traffic to the first network device through the newly added path. However, before the first network device updates an SAV rule, if the first network device receives the traffic of the second network device transferred from the newly added path, because an ingress of the traffic to the first network device cannot match the existing SAV rule of the first network device, the traffic is discarded by the first network device, causing a false positive.

To resolve the foregoing false positive, the first network device needs to add an SAV rule for the newly added path, so that the traffic of the second network device can be normally processed by the first network device after arriving at the first network device through the newly added path. Specifically, after the forwarding rule of the second network device changes, the second network device determines, based on a changed forwarding rule, a next-hop node of the first packet to the first network device. The second network device transmits the first packet to the next-hop node by using the first network device as the destination node. The first packet arrives at the first network device after being forwarded hop-by-hop on the newly added path, and the first packet includes newly added path information indicating the newly added path.

In a possible implementation, the second network device may periodically send the first packet to the first network device, that is, the second network device periodically sends the first packet to the first network device at an interval of preset time. If a newly added path on which the first network device serves as a destination node and the second network device serves as a source node exists in a period, the first packet arrives at the first network device through the newly added path.

103: The first network device adds the SAV rule based on the path information and the newly added path information.

After receiving the first packet from the newly added path, the first network device obtains the newly added path information indicating the newly added path. It can be learned from the foregoing that the path information of the first network device indicates the reachable path on which the first network device serves as the destination node, and the first network device may determine, based on the path information and the newly added path information, that the newly added path corresponding to the newly added path information is different from the currently reachable path on which the first network device serves as the destination node. Therefore, the first network device determines the corresponding newly added path based on the newly added path information, and adds the SAV rule for the newly added path, so that the traffic of the second network device can arrives at the first network device through the newly added path.

In this application, the source node of the newly added path sends the first packet, and the destination node may add the SAV rule after receiving the first packet, and not all network devices need to initiate a probe packet, thereby reducing network overheads and improving efficiency of updating the SAV rule.

Further, because each network device in the network stores its own path information, and the path information indicates a reachable path on which each network device serves as a destination node, in a process of forwarding the first packet, after a relay node on the newly added path also finds, after receiving the first packet, that the newly added path corresponding to the newly added path information in the first packet is different from a currently reachable path on which the relay node is used as a destination node, the relay node may also add an SAV rule based on the newly added path information in the first packet and path information of the relay node, so that the subsequent traffic of the second network device can arrive at the relay device on the newly added path. A specific procedure in which the relay node adds the SAV rule is similar to the manner in which the first network device adds the SAV rule in this application. Details are not described herein again.

In a possible implementation, the path information indicates the reachable path on which the first network device serves as the destination node, and the first network device needs to add the SAV rule by using the path information as a basis. Since the first network device needs to add the SAV rule, it indicates that the reachable path on which the first network device serves as the destination node also changes. Therefore, the first network device needs to update the path information based on the newly added path information, so that updated path information is still used as a basis for adding the SAV rule, thereby improving efficiency of updating the SAV rule.

It should be noted that after receiving the first packet, the first network device may first update the path information based on the newly added path information, and then add the SAV rule; or after receiving the first packet, the first network device may first add the SAV rule, and then update the path information based on the newly added path information. This is not limited in this application.

In a possible implementation, the newly added path information includes an identifier of a network device on the newly added path. Specifically, each network device (for example, the first network device and the second network device) on the newly added path records an identifier of the network device on the first packet in a process of transmitting the first packet. Therefore, after receiving the first packet, the first network device may obtain the identifier of the network device on the newly added path from the first packet. The first network device may determine the newly added path (that is, a forwarding path through which the first packet passes) based on the identifier of the network device on the newly added path, and add the SAV rule for the newly added path.

The source address validation method in this application is also applicable to a scenario in which a link is disconnected due to a fault or a link is unavailable in the network. Specifically, that a link is disconnected due to a fault or a link is unavailable in the network may be considered as that a large quantity of forwarding rules are modified in batches. For ease of understanding, the network topology shown in FIG. 11 is used as an example. It is assumed that a link between the node B and the node F is disconnected due to a fault. In this case, the link fault may be considered as that both the node B and the node F modify large quantities of forwarding rules in batches. For details, refer to the following Table 2. Table 2 is an example of changes of forwarding rules of the node B and the node F before and after the link fault occurs.

**Table 2**

| Node | To-be-changed forwarding rule | Changed forwarding rule |
|---|---|---|
| B | Next-hop node of B to F: node F | Next-hop node of B to F: node A |
| | Next-hop node of B to E: node F | Next-hop node of B to E: node A |
| F | Next-hop node of F to B: node B | Next-hop node of F to B: node A |
| | Next-hop node of F to C: node B | Next-hop node of F to C: node E |

With reference to Table 2 and FIG. 11, it can be learned that, after the link fault occurs between the node B and the node F, for the node B, a path B->A->F is newly added for traffic of the node B to the node F, where the node B is used as a source node of the newly added path, and the node F is used as a destination node of the newly added path. Therefore, the node B sends a first packet to the node F, so that the node F adds an SAV rule based on newly added path information in the first packet. After the link fault occurs between the node B and the node F, for the node F, a path F->A->B is newly added for traffic of the node F to the node B, where the node F is used as a source node of the newly added path, and the node B is used as a destination node of the newly added path. Therefore, the node F sends a first packet to the node B, so that the node B adds an SAV rule based on newly added path information in the first packet. In addition, a path F->E->D->C is newly added for traffic of the node F to the node C, where the node F is used as a source node of the newly added path, and the node C is used as a destination node of the newly added path. Therefore, the node F further needs to send a first packet to the node C. The first packet arrives at the node C after passing through the node E and the node D as relays, and the node C adds an SAV rule based on newly added path information in the first packet.

Similarly, if the link fault between the node B and the node F has been rectified and recovered, link recovery between the node B and the node F may also be considered as that both the node B and the node F modify large quantities of forwarding rules in batches. For details, refer to the following Table 3. Table 3 is an example of changes of forwarding rules of the node B and the node F before and after link recovery occurs.

**Table 3**

| Node | To-be-changed forwarding rule | Changed forwarding rule |
|---|---|---|
| B | Next-hop node of B to F: node A | Next-hop node of B to F: node F |
| | Next-hop node of B to E: node A | Next-hop node of B to E: node F |
| F | Next-hop node of F to B: node A | Next-hop node of F to B: node B |
| | Next-hop node of F to C: node E | Next-hop node of F to C: node B |

With reference to Table 3 and FIG. 11, it can be learned that, after the link between the node B and the node F is recovered, for the node B, a path B->F is newly added for traffic of the node B to the node F, where the node B is used as a source node of the newly added path, and the node F is used as a destination node of the newly added path. Therefore, the node B sends a first packet to the node F, so that the node F adds an SAV rule based on newly added path information in the first packet. For the node F, a path F->B is newly added for traffic of the node F to the node B, where the node F is used as a source node of the newly added path, and the node B is used as a destination node of the newly added path. Therefore, the node F sends a first packet to the node B, so that the node B adds an SAV rule based on newly added path information in the first packet. In addition, a path F->B->C is newly added for traffic of the node F to the node C, where the node F is used as a source node of the newly added path, and the node C is used as a destination node of the newly added path. Therefore, the node F further needs to send a first packet to the node C. The first packet arrives at the node C after passing through the node B as a relay, and the node C adds an SAV rule based on newly added path information in the first packet.

It should be understood that the SAV rule of the first network device requires that both a source prefix of the received traffic and an interface path to the first network device can meet conditions, so that the traffic can be normally processed by the first network device. However, in actual application, in addition to the traffic of the second network device as the source node to arrive at the first network device, there is usually traffic of another network device as a source node. A forwarding path of the traffic is that the traffic first passes through the second network device and then arrives at the first network device. The "another network device" is a subsequent device of the second network device.

It is assumed that the first network device adds an SAV rule for the newly added path only by using the second network device as a source prefix, in the newly added SAV rule, the second network device serves as the source prefix. When the traffic of the second network device as the source node is transmitted to the first network device through the newly added path, the traffic may meet both the conditions of the source prefix and the interface path to the first network device in the newly added SAV rule. Therefore, the traffic may be normally processed by the first network device, and is not discarded by the first network device. However, the another network device serves as the subsequent device of the second network device, although a next hop of the another device is limited in a forwarding rule of the another network device, a complete forwarding path is not limited. Therefore, after traffic of the subsequent device to the first network device arrives at the second network device, the second network device determines a next hop of the traffic. If the second network device sends, based on a changed forwarding rule of the second network device, the traffic of the subsequent device to the newly added path, although the traffic may meet the condition of the interface path to the first network device, because a source prefix of the traffic is the subsequent device of the second network device, the traffic cannot match the SAV rule in which the second network device serves as the source prefix. Therefore, the source prefix of the traffic of the subsequent device cannot meet the condition of the newly added SAV rule. As a result, after arriving at the first network device, the traffic cannot be normally processed by the first network device, and is discarded by the first network device, causing a false positive.

For ease of understanding, the network topology shown in FIG. 11 in this application is used as an example for description. As shown in FIG. 11, it is assumed that before the forwarding rule of the node B (equivalent to the second network device in this application) changes, the traffic of the node B arrives at the node F (equivalent to the first network device in this application) through the interface F-B, and the traffic of the node C first arrives at the node B, and then is forwarded by the node B to the node F through the interface F-B. In this case, the SAV rules on the node F for the traffic of the node B and the traffic of the node C should be as the following Table 4.

**Table 4**

| Number | Source prefix | Valid ingress |
|---|---|---|
| 1 | B | Interface F-B |
| 2 | C | Interface F-B |

Next, the forwarding rule of the node B changes to: the path of the traffic of the node B to the node F changes to B->A->F (a newly added path). In this case, the traffic of the node B arrives at the node F through an interface F-A. After the node B sends a first packet to the node F through the newly added path, it is assumed that the node F adds an SAV rule for the newly added path only by using the node B as a source prefix. In this case, an updated SAV rule in the node F is as the following Table 5.

**Table 5**

| Number | Source prefix | Valid ingress |
|---|---|---|
| 1 | B | Interface F-B |
| 2 | C | Interface F-B |
| 3 | B | Interface F-A |

In this case, if the traffic of the node B as the source prefix arrives at the first network device through the newly added path, the traffic may meet two conditions at the same time: "a source prefix is B" and "a valid ingress is an interface F-A" in an SAV rule 3 newly added by the node F. Therefore, after arriving at the node F, the traffic may be forwarded by the node F, and is not discarded by the node F. However, if the traffic of the node C as a source prefix arrives at the node F through the newly added path, the traffic cannot match "a source prefix is C" and "a valid ingress is an interface F-A" in an SAV rule 2 of the node F, and cannot match "the source prefix is B" and "the valid ingress is the interface F-A" in the SAV rule 3 of the node F either. Therefore, the traffic cannot match any SAV rule of the node F in Table 3, and is discarded by the node F. It can be learned that, although the forwarding rule of the node C does not change, the change of the forwarding rule of the node B also indirectly affects normal forwarding of the traffic of the node C after arriving at the node F. Therefore, to enable the traffic of the node C as the source prefix to be forwarded by the node F after arriving at the node F through the newly added path, the node F needs to add an SAV rule for the newly added path by using the node C as the source prefix again.

**Table 6**

| Number | Source prefix | Valid ingress |
|---|---|---|
| 1 | B | Interface F-B |
| 2 | C | Interface F-B |
| 3 | B | Interface F-A |
| 4 | C | Interface F-A |

Refer to Table 6. The SAV rule 4 in the table is the SAV rule in which the node C is used as the source prefix and that is for the newly added path. If the traffic of the node C as the source prefix arrives at the node F through the newly added path, the traffic can meet two conditions at the same time: "a source prefix is C" and "a valid ingress is an interface F-A" in the SAV rule 4 newly added by the node F. Therefore, after the traffic arrives at the node F, the traffic is validated as valid traffic according to the SAV rule 4, and is not discarded by the node F, and may be forwarded by the node F.

In conclusion, the change of the forwarding rule of the second network device affects traffic forwarding of the subsequent device of the second network device. Therefore, to ensure that the traffic of the subsequent device of the second network device as the source node can be normally processed by the first network device after arriving at the first network device through the newly added path, in this application, after receiving the first packet from the second network device, in addition to adding the SAV rule to the second network device, the first network device needs to find another network device to which an SAV rule needs to be added (that is, an association device of the first packet in this application), and add the SAV rules to the second network device and the association device of the second network device. This application provides two different solutions for determining the association device of the second network device. The following separately describes the solutions.

Solution A: It can be learned from the foregoing that the first packet includes the newly added path information indicating the newly added path. After receiving the first packet, the first network device may determine, based on the newly added path information in the first packet, that the source node of the first packet is the second network device, that is, determine that the SAV rule in which the second network device serves as the source prefix and that is for the newly added path needs to be added. In some examples, if the newly added path information includes the identifier of the network device on the newly added path, the first network device may determine a network device corresponding to a first identifier in the newly added path information as the source node.

Next, after determining that the source node of the first packet is the second network device, the first network device needs to search for the association device of the first packet. Because the first network device stores the path information, the path information includes the reachable path on which the first network device serves as the destination node. Therefore, the first network device may determine the association device of the first packet based on the path information, where a probe packet for which the association device serves as a source node arrives at the first network device after being forwarded by the second network device. In other words, the reachable path of traffic of the association device to the first network device includes the second network device. Therefore, traffic forwarding of the association device is affected by the change of the forwarding rule of the second network device.

Then, the first network device may add the SAV rule in which the second network device serves as the source prefix and an SAV rule in which the association device serves as a source prefix. Therefore, after the traffic of the association device affected by the change of the forwarding rule of the second network device arrives at the first network device through the newly added path, the traffic may be normally processed by the first network device, and is not discarded by the first network device, thereby avoiding the false positive.

In a possible implementation, in the newly added path, the first network device is a next-hop node of a third network device. In other words, the first packet sent by the second network device on the newly added path needs to first arrives at the third network device, and then forwarded by the third network device to the first network device. In this case, the newly added path information in the first packet includes information indicating the third network device (for example, an identifier of the third network device). Therefore, the first network device may determine, based on the information indicating the third network device, that an interface path between the third network device and the first network device on the newly added path needs to be a valid ingress. In this case, the first network device adds a first SAV rule and a second SAV rule. Specifically, a source prefix field of the first SAV rule indicates the second network device, and a valid ingress field of the first SAV rule indicates the interface path between the third network device and the first network device. A source prefix field of the second SAV rule indicates the association device, and a valid ingress field of the second SAV rule indicates the interface path between the third network device and the first network device.

For ease of understanding, the following continues to describe the solution A by using the diagram of the network topology shown in FIG. 11 as an example. As shown in FIG. 11, before the forwarding rule of the node B changes, the traffic of the node B arrives at the node F through the interface F-B, and the traffic of the node C first arrives at the node B, and then is forwarded by the node B to the node F through the interface F-B. Next, the forwarding rule of the node B changes to: the path of the traffic of the node B to the node F changes to B->A->F (a newly added path). The following describes a processing manner of each node in this scenario.

**Table 7**

| Node B processing manner | Node A processing manner | Node F processing manner | Node C processing manner |
|---|---|---|---|
| 1. Send a first packet to a node F through a newly added path | 1. In this example scenario, a node A does not need to add an SAV rule | 1. Receive the first packet from the node A | No response is required |
| | | 2. Update path information based on the first packet | |
| | 2. Carry an identifier of the node A on the first packet, and then forward the first packet to the node F | 3. Add an SAV rule in which a node B is used as a source prefix and an SAV rule in which a node C is used as a source prefix | |

With reference to the scenario shown in Table 5, a possible manner in which the node F updates the path information is described. FIG. 13 is a diagram of updating the path information by the node F according to this application. In an example shown in FIG. 13, the path information of the node F is identified in a content form of a DAG. The node C is a next-level node of the node B, which indicates that a reachable path through which the traffic of the node C passes to the node F includes the node B. Therefore, traffic forwarding of the node C is affected by the change of the forwarding rule of the node B. After receiving the first packet from the node B, the node F determines, based on the path information, that the node C is the next-level node of the node B, and may determine that the node C is an association device of the first packet. Therefore, as shown in FIG. 13, the node F may update the path information, and bridge reachable paths through which the node C and the node B pass to the node F in the DAG to the node A. Correspondingly, the node F adds the SAV rule in which the node B is used as the source prefix and the SAV rule in which the node C is used as the source prefix.

Solution B: In this solution, the association device of the first packet is directly specified by the second network device. Therefore, in addition to including the newly added path information indicating the newly added path, the first packet sent by the second network device further includes information indicating the association device of the first packet. For example, the information indicating the association device of the first packet may be specified as an identifier of a network device of the association device.

After receiving the first packet, the first network device may determine, based on the newly added path information in the first packet, that the source node of the first packet is the second network device, that is, determine that the SAV rule in which the second network device serves as the source prefix and that is for the newly added path needs to be added. However, the first network device does not need to actively search for the association device of the first packet. The first network device may obtain, from the first packet, the information indicating the association device of the first packet (for example, the identifier of the network device), and then match the information indicating the association device of the first packet with the path information. After matching, if it may be determined that the reachable path of the association device, indicated in the first packet, to the first network device includes the second network device (that is, it is determined that the association device is the subsequent device of the second network device), the first network device determines that the information indicating the association device of the first packet in the first packet is valid.

Next, the first network device may add the SAV rule in which the second network device serves as the source prefix and the SAV rule in which the association device serves as the source prefix. The second network device specifies the association device, so that only a network device permitted by the second network device can send traffic to the first network device through the newly added path, and a network device that is not specified as the association device can only continue to arrive at the first network device through the original path, thereby improving network security and improving efficiency of updating the SAV rule.

It should be noted that, if the information indicating the association device of the first packet in the first packet is empty, after receiving the first packet, the first network device may determine that there is no association device associated with the first packet. In this case, the first network device only needs to add the SAV rule in which the second network device serves as the source prefix. FIG. 14 is another diagram of updating the path information by the node F according to this application. As shown in FIG. 14, in the first packet sent by the node B, the information indicating the association device is empty. Therefore, when the node F updates the path information, a reachable path of another network device is not affected, and only the node B is added to the node A as a next-level node.

In conclusion, in the solution A, the first network device determines the association device of the first packet, that is, the first network device uniformly determines the source prefix to which the SAV rule needs to be added. Compared with the solution B, in the solution A, the first packet does not need to include the information indicating the association device, and no additional packet storage overheads and network transfer overheads are consumed. A more complex network topology structure indicates that more resource overheads are reduced in the solution A. In the solution B, the second network device specifies the association device of the first packet, that is, the second network device uniformly determines the source prefix to which the SAV rule needs to be added. Therefore, the network device that is not specified as the association device can only continue to arrive at the first network device through the original path. Compared with the solution A, the solution B has higher security and flexibility.

In actual application, the solution A and the solution B in this application may be applied in combination with each other. Specifically, the second network device may send the first packet in the solution A to the first network device based on a newly added path, or may send the first packet in the solution B to the first network device based on another newly added path; or the second network device may send the first packet in the solution A to the first network device, and another network device (for example, a fourth network device) sends the first packet in the solution B to the first network device. This is not limited in this application. The first packets in the solution A and the solution B may be distinguished by using different format types or identifiers, so that after receiving the first packet in the solution A or the solution B, the first network device separately performs different processing.

After the first network device adds the SAV rule of the newly added path, the SAV rule of the original path is still valid. The first network device may age the SAV rule corresponding to the original path, so that the SAV rule becomes invalid, and the traffic cannot arrive at the first network device through the original path.

An existing SAV rule aging manner mainly includes the following two manners:
In a first manner, a corresponding idle timeout (idle timeout) is configured for each SAV rule, and idle timeouts of SAV rules may be the same or may be different. If there is no traffic matching the SAV rule within the idle timeout (only a source prefix is matched, and a valid ingress is not required to be matched) corresponding to the SAV rule, the SAV rule is aged and becomes invalid. If there is traffic matching the SAV rule within the idle timeout (only a source prefix is matched, and a valid ingress is not required to be matched) corresponding to the SAV rule, the idle timeout of the SAV rule is refreshed and the idle timeout is reset, and the SAV rule is aged only when there is no traffic matching the SAV rule within the idle timeout of the SAV rule.

In a second manner, a corresponding hard timeout (hard timeout) is configured for each SAV rule, and hard timeouts of SAV rules may be the same or may be different. Generally, a time length set for the hard timeout is significantly greater than a time length of the idle timeout. The SAV rule is always valid within the hard timeout corresponding to the SAV rule. When the hard timeout expires, the SAV rule is forcibly aged and becomes invalid.

In this application, the SAV rule of the first network device may also be applied to the foregoing two SAV rule aging manners. In addition, if the SAV rule is aged, it indicates that a reachable path corresponding to the SAV rule is invalid, and the first network device also needs to update the path information (for example, delete the reachable path of the SAV rule in the DAG) based on the aged SAV rule. When the first network device adds the SAV rule of the newly added path, the SAV rule of the original path is still valid. In this case, a same source prefix corresponds to two different SAV rules. In some scenarios, the SAV rule of the original path needs to be invalid. However, in the foregoing two SAV rule aging manners, each SAV rule has at least one buffer time before aging. However, before the SAV rule of the original path is aged, if attack traffic and malicious traffic are sent to the first network device through the original path, the attack traffic and the malicious traffic may pass validation of the SAV rule of the original path, thereby affecting network security and causing the false negative.

In this case, after adding the SAV rule, the first network device sends a request packet to a target device, where the target device is a network device indicated by a source prefix field in the newly added SAV rule. Specifically, when the first network device adds the SAV rule in which the second network device serves as the source prefix and the SAV rule in which the association device serves as the source prefix, the second network device and the association device are the foregoing target devices, and the first network device sends request packets to the second network device and the association device.

After receiving the request packets, the second network device and the association device respectively send target probe packets to the first network device, where the target probe packets and the probe packet that is received by the first network and that is used for generating the path information are based on a same protocol, but the second network device and the association device increase sequence numbers (for example, sequence numbers are increased by 1) of the target probe packets sent to the first network device. For example, if the probe packet is a DPP packet in a DSAV protocol, correspondingly, the probe path through which the probe packet arrives at the first network device is a DPP path. In this case, the target probe packet is a DPP packet whose sequence number is increased (for example, a sequence number is increased by 1).

It should be understood that in the SAV rules of the first network device, each SAV rule also has a corresponding sequence number. After receiving the target probe packets, the first network device compares the sequence numbers of the target probe packets with a sequence number of a local SAV rule, to age a target SAV rule. A source prefix of the aged target SAV rule is the same as a source prefix of the target probe packet, and a sequence number of the target SAV rule needs to be less than the sequence number of the target probe packet. Therefore, after adding the new SAV rule, the first network device does not need to wait for a periodic time-consumed aging process of the SAV rule, and the first network device can actively initiate an aging procedure of the SAV rule of the original path, and age the SAV rule of the original path in a timely manner, thereby quickly reducing false negative cases and improving network security. This is applicable to a scenario in which a requirement on network security is high.

For ease of understanding, the following continues to describe the aging procedure of the SAV rule in this application by using the diagram of the network topology shown in FIG. 11 as an example. As shown in FIG. 11, before the forwarding rule of the node B changes, the traffic of the node B arrives at the node F through the interface F-B, and the traffic of the node C first arrives at the node B, and then is forwarded by the node B to the node F through the interface F-B. Next, the forwarding rule of the node B changes to: the path of the traffic of the node B to the node F changes to B->A->F (a newly added path). After receiving the first packet from the node B, the node F adds the new SAV rule. In this case, the SAV rule for the original path in the node F needs to be aged. The following describes a processing manner of each node in this scenario.

**Table 8**

| Node B processing manner | Node A processing manner | Node F processing manner | Node C processing manner |
|---|---|---|---|
| 1. Send a first packet to a node F through a newly added path | 1. In this example scenario, a node A does not need to add an SAV rule | 1. Receive the first packet from the node A | 1. Receive the request packet from the node F |
| | | 2. Update path information based on the first packet | |
| | | | 2. Send a DPP packet whose sequence number is increased by 1 to the node F |
| 2. Receive a request packet from the node F | 2. Carry an identifier of the node A on the first packet, and then forward the first packet to the node F | 3. Add an SAV rule in which a node B is used as a source prefix and an SAV rule in which a node C is used as a source prefix | |
| 3. Send a DPP packet whose sequence number is increased by 1 to the node F | | | |
| | | 4. Send request packets to the node B and the node C | |
| | | 5. After receiving DPP packets from the node B and the node C, age the SAV rules and update a DAG | |

Further, in addition to that the first network device sends the request packet to the target device, in another implementation, the second network device may also send the request packet to the association device, where the request packet is used to indicate the association device to send the target probe packet to the first network device. After sending the first packet to the first network device, the second network device actively sends the target probe packet to the first network device again. An operation performed after the first network device receives the target probe packet is similar to the foregoing procedure in which the first network device sends the request packet to the target device. Details are not described herein again.

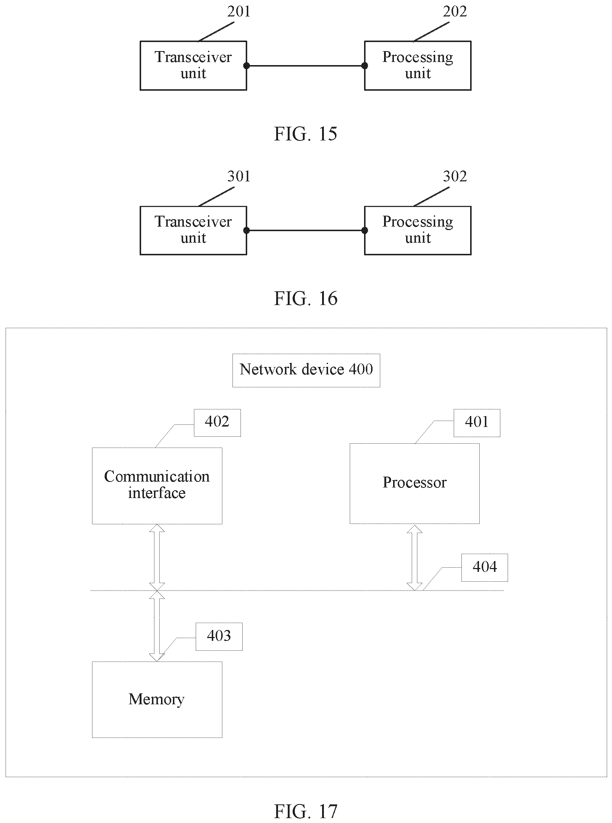

Next, to better implement the foregoing solutions in embodiments of this application, an embodiment of this application further provides related devices configured to implement the foregoing solutions. Specifically, FIG. 15 is a diagram of a structure of a first network device according to an embodiment of this application. As shown in FIG. 15, the first network device includes:
a transceiver unit 201, configured to receive a first packet, where the first packet arrives at the first network device through a newly added path on which a second network device serves as a source node and the first network device serves as a destination node, and the first packet includes newly added path information indicating the newly added path; and
a processing unit 202, configured to add a source address validation SAV rule based on path information and the newly added path information, where the path information includes a reachable path on which the first network device serves as a destination node.

In a possible design, the transceiver unit 201 is further configured to receive a probe packet, where the probe packet arrives at the first network device through a probe path on which a probe device serves as a source node and the first network device serves as a destination node, and the probe packet includes an identifier of a network device on the probe path; and
the processing unit 202 is further configured to obtain the path information based on the identifier of the network device on the probe path.

In a possible design, the processing unit 202 is specifically configured to:
determine, based on the newly added path information, that the source node of the first packet is the second network device;
determine an association device of the first packet based on the path information, where a probe packet for which the association device serves as a source node arrives at the first network device after being forwarded by the second network device; and
add an SAV rule in which the second network device serves as a source prefix and an SAV rule in which the association device serves as a source prefix.

In a possible design, the newly added path includes a third network device, the first network device is a next-hop node of the third network device, and the processing unit 202 is specifically configured to:
add a first SAV rule and a second SAV rule, where a source prefix field of the first SAV rule indicates the second network device, a valid ingress field of the first SAV rule indicates an interface path between the third network device and the first network device, a source prefix field of the second SAV rule indicates the association device, and a valid ingress field of the second SAV rule indicates an interface path between the third network device and the first network device.

In a possible design, the first packet further includes information indicating an association device of the first packet, and the processing unit 202 is specifically configured to:
determine, based on the newly added path information, that the source node of the first packet is the second network device;
determine the association device based on the information indicating the association device of the first packet and the path information; and
add an SAV rule in which the second network device serves as a source prefix and an SAV rule in which the association device serves as a source prefix.

In a possible design, the processing unit 202 is further configured to:
send a request packet to a target device, where the target device is a network device indicated by a source prefix field in a newly added SAV rule;
receive a target probe packet from the target device; and
age a target SAV rule based on the target probe packet, where a sequence number of the target SAV rule is less than a sequence number of the target probe packet.

In a possible design, the processing unit 202 is further configured to:
update the path information based on the newly added path information.

In a possible design, the probe packet is a destination prefix probe DPP packet, and the probe path is a DPP path.

In a possible design, the newly added path information includes an identifier of a network device on the newly added path, and the processing unit 202 is specifically configured to:
add the source address validation SAV rule based on the identifier of the network device on the newly added path and the path information.

It should be noted that content such as information exchange and an execution process between the modules/units in the first network device is based on a same concept as the method embodiment corresponding to FIG. 10 in this application. For specific content, refer to the descriptions in the foregoing method embodiments in this application. Details are not described herein again.

FIG. 16 is a diagram of a structure of a second network device according to an embodiment of this application. As shown in FIG. 16, the second network device includes:
a transceiver unit 301, configured to send a first packet to a first network device, where the first packet arrives at the first network device through a newly added path on which the second network device serves as a source node and the first network device serves as a destination node, the first packet includes newly added path information indicating the newly added path, the newly added path information indicates the first network device to add a source address validation SAV rule based on path information and the newly added path information, and the path information includes a reachable path on which the first network device serves as a destination node.

In a possible design, the second network device further includes:
a processing unit 302, configured to probe that the newly added path is added between the second network device and the first network device.

In a possible design, the second network device further includes:
a processing unit 302, configured to send the first packet to the first network device at an interval of preset time.

In a possible design, the second network device further includes:
a processing unit 302, configured to send a probe packet to the first network device, where the probe packet arrives at the first network device through a probe path on which the second network device serves as a source node and the first network device serves as a destination node, the probe packet includes an identifier of a network device on the probe path, and the probe packet is used by the first network device to obtain the path information based on the identifier of the network device on the probe path.

In a possible design, the second network device further includes the processing unit 302;
the transceiver unit 301 is further configured to receive a request packet from the first network device; and
the processing unit 302 is configured to send a target probe packet to the first network device based on the request packet, where the target probe packet is used by the first network device to age a target SAV rule based on the target probe packet, and a sequence number of the target SAV rule is less than a sequence number of the target probe packet.

In a possible design, the probe packet is a destination prefix probe DPP packet, and the probe path is a DPP path.

In a possible design, the newly added path information includes an identifier of a network device on the newly added path.

It should be noted that content such as information exchange and an execution process between the modules/units in the second network device is based on a same concept as the method embodiment corresponding to FIG. 10 in this application. For specific content, refer to the descriptions in the foregoing method embodiments in this application. Details are not described herein again.

An embodiment of this application further provides a network device. FIG. 17 is a diagram of a structure of the network device according to an embodiment of this application. A network device 400 may be used as the first network device described in the corresponding embodiment in FIG. 15, and is configured to implement an operation performed by the first network device in the corresponding embodiment in FIG. 10. Alternatively, a network device 400 may be used as the second network device described in the corresponding embodiment in FIG. 17, and is configured to implement an operation performed by the second network device in the corresponding embodiment in FIG. 10. As shown in FIG. 17, the network device 400 includes a processor 401, a communication interface 402, a memory 403, and a bus 404. Specifically, the processor 401 may be a central processing unit (CPU, central processing unit), or may be an application-specific integrated circuit (ASIC, application specific integrated circuit), or may be one or more integrated circuits configured to implement embodiments of this application, for example, one or more digital signal processors (DSP, digital signal processor), or one or more field programmable gate arrays (FPGA, field programmable gate array). The communication interface 402 is configured to communicate with another network device.

Next, an example in which the network device 400 is used as the first network device serves for description.

Specifically, when the network device 400 is used as the first network device, the communication interface 402 is configured to receive a first packet, where the first packet arrives at the first network device through a newly added path on which a second network device serves as a source node and the first network device serves as a destination node, and the first packet includes newly added path information indicating the newly added path.

The processor 401 is configured to add a source address validation SAV rule based on path information and the newly added path information, where the path information includes a reachable path on which the first network device serves as a destination node.

In an example, the communication interface 402 is further configured to receive a probe packet, where the probe packet arrives at the first network device through a probe path on which a probe device serves as a source node and the first network device serves as a destination node, and the probe packet includes an identifier of a network device on the probe path.

The processor 401 is further configured to obtain the path information based on the identifier of the network device on the probe path.

In an example, the processor 401 is specifically configured to:
determine, based on the newly added path information, that the source node of the first packet is the second network device;
determine an association device of the first packet based on the path information, where a probe packet for which the association device serves as a source node arrives at the first network device after being forwarded by the second network device; and
add an SAV rule in which the second network device serves as a source prefix and an SAV rule in which the association device serves as a source prefix.

In an example, in the newly added path, the first network device is a next-hop node of a third network device, and the processor 401 is specifically configured to:
add a first SAV rule and a second SAV rule, where a source prefix field of the first SAV rule indicates the second network device, a valid ingress field of the first SAV rule indicates an interface path between the third network device and the first network device, a source prefix field of the second SAV rule indicates the association device, and a valid ingress field of the second SAV rule indicates an interface path between the third network device and the first network device.

In an example, the first packet further includes information indicating an association device of the first packet, and the processor 401 is specifically configured to:
determine, based on the newly added path information, that the source node of the first packet is the second network device;
determine the association device based on the information indicating the association device of the first packet and the path information; and
add an SAV rule in which the second network device serves as a source prefix and an SAV rule in which the association device serves as a source prefix.

In an example, the processor 401 is further configured to:
send a request packet to a target device, where the target device is a network device indicated by a source prefix field in a newly added SAV rule;
receive a target probe packet from the target device; and
age a target SAV rule based on the target probe packet, where a sequence number of the target SAV rule is less than a sequence number of the target probe packet.

In a possible design, the processor 401 is further configured to:
update the path information based on the newly added path information.

In a possible design, the newly added path information includes an identifier of a network device on the newly added path, and the processor 401 is specifically configured to:
add, for the first network device, the source address validation SAV rule based on the identifier of the network device on the newly added path and the path information.

The memory 403 is configured to store program code that can implement the method in this application, a configuration file of a network device in a TSN domain, or other content. The memory 403 may be specifically a volatile memory (volatile memory), for example, a random access memory (RAM, random-access memory); or a non-volatile memory (non-volatile memory), for example, a read-only memory (ROM, read-only memory), a flash memory (flash memory), a hard disk (HDD, hard disk drive), or a solid state disk (SSD, solid-state drive); or a combination of the foregoing types of memories. The memory 403 is any other medium that can be configured to carry or store expected program code in a form of an instruction or a data structure and that is accessible by a computer, but no limitation is set thereto. In an example, the memory 403 is configured to store the path information and the SAV rule of the first network device.

In embodiments of this application, a specific connection medium between the communication interface 402, the processor 401, and the memory 403 is not limited. In embodiments of this application, in FIG. 17, the memory 403, the processor 402, and the communication interface 402 are connected through a bus 404. The bus is represented by a bold line in FIG. 17. A connection manner between other components is merely an example for description, and is not limited thereto. The bus may be classified into an address bus, a data bus, a control bus, and the like. For ease of representation, only one thick line is used to represent the bus in FIG. 17, but this does not mean that there is only one bus or only one type of bus.

It should be noted that content such as information exchange and an execution process between the modules/units in the network device is based on a same concept as the method embodiment corresponding to FIG. 10 in this application. For specific content, refer to the descriptions in the foregoing method embodiments in this application. Details are not described herein again.

Optionally, in addition to the foregoing structure, the network device in embodiments of this application may further be in the following structure:

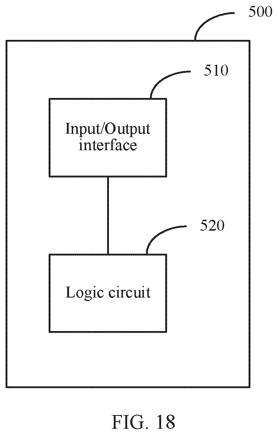

FIG. 18 is a diagram of another structure of a network device according to an embodiment of this application. The network device may be configured to implement a function of the first network device in the foregoing method. An apparatus 500 may be the first network device or a chip in the first network device. Alternatively, the network device may be configured to implement a function of the second network device in the foregoing method. The apparatus 500 may be the second network device or a chip in the second network device. As shown in FIG. 18, the apparatus 500 includes:
at least one input/output interface 510 and a logic circuit 520. The input/output interface 510 may be an input/output circuit, or may be referred to as a communication interface. The logic circuit 520 may be a signal processor, a chip, or another integrated circuit that can implement the method in this application.

The at least one input/output interface 510 is configured to input or output a signal or data. For example, the input/output interface 510 is configured to receive a first packet. For example, the input/output interface 510 is configured to send a request packet to a target device.

The logic circuit 520 is configured to perform a part or all of the steps in any one of the methods provided in embodiments of this application. The logic circuit 520 may implement a function implemented by the processing unit 202 in the first network device, or the logic circuit 520 may implement a function implemented by the processing unit 302 in the second network device. For example, the logic circuit 520 is configured to add a source address validation SAV rule based on path information and the newly added path information, where the path information includes a reachable path on which the first network device serves as a destination node.

When the communication apparatus is the chip used in the first network device, the terminal chip implements a function of the first network device in the foregoing method embodiment. The terminal chip receives information from another module (for example, a radio frequency module or an antenna) in a terminal, where the information is sent by the second network device to the first network device.

When the communication apparatus is the chip used in the second network device, the terminal chip implements a function of the second network device in the foregoing method embodiment. The terminal chip receives information from another module (for example, a radio frequency module or an antenna) in a terminal, where the information is sent by the first network device to the first network device.

Based on same concepts as the foregoing method embodiments, this application further provides a communication system. The communication system may include at least one of the first network device, the second network device, or the third network device in this application. The communication system may be configured to implement the method in any one of the foregoing method embodiments and possible implementations of the method embodiments.

An embodiment of this application further provides a computer program product. When the computer program product runs on a processor, the source address validation method described in the embodiment shown in FIG. 10 is implemented.

An embodiment of this application further provides a computer-readable storage medium. The computer-readable storage medium stores a program used for signal processing. When the program is run on a processor, the source address validation method described in the embodiment shown in FIG. 10 is implemented.

Functions of the network device provided in embodiments of this application may be integrated into a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method described in embodiment shown in FIG. 10. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A source address validation method, comprising:
receiving, by a first network device, a first packet, wherein the first packet arrives at the first network device through a newly added path on which a second network device serves as a source node and the first network device serves as a destination node, and the first packet comprises newly added path information indicating the newly added path; and
adding, by the first network device, a source address validation SAV rule based on path information and the newly added path information, wherein the path information comprises a reachable path on which the first network device serves as a destination node.

2. The method according to claim 1, wherein before the receiving, by a first network device, a first packet, the method further comprises:
receiving, by the first network device, a probe packet, wherein the probe packet arrives at the first network device through a probe path on which a probe device serves as a source node and the first network device serves as a destination node, and the probe packet comprises an identifier of a network device on the probe path; and
obtaining, by the first network device, the path information based on the identifier of the network device on the probe path.

3. The method according to claim 1 or 2, wherein the adding, by the first network device, an SAV rule based on path information and the newly added path information comprises:
determining, by the first network device based on the newly added path information, that the source node of the first packet is the second network device;
determining, by the first network device, an association device of the first packet based on the path information, wherein a probe packet for which the association device serves as a source node arrives at the first network device after being forwarded by the second network device; and
adding, by the first network device, an SAV rule in which the second network device serves as a source prefix and an SAV rule in which the association device serves as a source prefix.

4. The method according to claim 3, wherein the newly added path comprises a third network device, the first network device is a next-hop node of the third network device, and the adding, by the first network device, an SAV rule in which the second network device serves as a source prefix and an SAV rule in which the association device serves as a source prefix comprises:
adding, by the first network device, a first SAV rule and a second SAV rule, wherein a source prefix field of the first SAV rule indicates the second network device, a valid ingress field of the first SAV rule indicates an interface path between the third network device and the first network device, a source prefix field of the second SAV rule indicates the association device, and a valid ingress field of the second SAV rule indicates an interface path between the third network device and the first network device.

5. The method according to claim 1 or 2, wherein the first packet further comprises information indicating an association device of the first packet, and the adding, by the first network device, an SAV rule based on path information and the newly added path information comprises:
determining, by the first network device based on the newly added path information, that the source node of the first packet is the second network device;
determining, by the first network device, the association device based on the information indicating the association device of the first packet and the path information; and
adding, by the first network device, an SAV rule in which the second network device serves as a source prefix and an SAV rule in which the association device serves as a source prefix.

6. The method according to any one of claims 1 to 5, wherein the method further comprises:
sending, by the first network device, a request packet to a target device, wherein the target device is a network device indicated by a source prefix field in a newly added SAV rule;
receiving, by the first network device, a target probe packet from the target device; and
aging, by the first network device, a target SAV rule based on the target probe packet, wherein a sequence number of the target SAV rule is less than a sequence number of the target probe packet.

7. The method according to any one of claims 1 to 6, wherein the method further comprises:
updating, by the first network device, the path information based on the newly added path information.

8. The method according to claim 2, wherein the probe packet is a destination prefix probe DPP packet, and the probe path is a DPP path.

9. The method according to any one of claims 1 to 8, wherein the newly added path information comprises an identifier of a network device on the newly added path, and the adding, by the first network device, a source address validation SAV rule based on path information and the newly added path information comprises:
adding, by the first network device, the source address validation SAV rule based on the identifier of the network device on the newly added path and the path information.

10. A source address validation method, comprising:
sending, by a second network device, a first packet to a first network device, wherein the first packet arrives at the first network device through a newly added path on which the second network device serves as a source node and the first network device serves as a destination node, the first packet comprises newly added path information indicating the newly added path, the newly added path information indicates the first network device to add a source address validation SAV rule based on path information and the newly added path information, and the path information comprises a reachable path on which the first network device serves as a destination node.

11. The method according to claim 10, wherein before the sending, by a second network device, a first packet to a first network device, the method further comprises:
probing, by the second network device, that the newly added path is added between the second network device and the first network device.

12. The method according to claim 10, wherein before the sending, by a second network device, a first packet to a first network device, the method further comprises:
sending, by the second network device, the first packet to the first network device at an interval of preset time.

13. The method according to any one of claims 10 to 12, wherein before the sending, by a second network device, a first packet to a first network device, the method further comprises:
sending, by the second network device, a probe packet to the first network device, wherein the probe packet arrives at the first network device through a probe path on which the second network device serves as a source node and the first network device serves as a destination node, the probe packet comprises an identifier of a network device on the probe path, and the probe packet is used by the first network device to obtain the path information based on the identifier of the network device on the probe path.

14. The method according to any one of claims 10 to 13, wherein after the sending, by a second network device, a first packet to a first network device, the method further comprises:
receiving, by the second network device, a request packet from the first network device; and
sending, by the second network device, a target probe packet to the first network device based on the request packet, wherein the target probe packet is used by the first network device to age a target SAV rule based on the target probe packet, and a sequence number of the target SAV rule is less than a sequence number of the target probe packet.

15. The method according to claim 13, wherein the probe packet is a destination prefix probe DPP packet, and the probe path is a DPP path.

16. The method according to any one of claims 10 to 15, wherein the newly added path information comprises an identifier of a network device on the newly added path.

17. A first network device, wherein the first network device comprises:
a transceiver unit, configured to receive a first packet, wherein the first packet arrives at the first network device through a newly added path on which a second network device serves as a source node and the first network device serves as a destination node, and the first packet comprises newly added path information indicating the newly added path; and
a processing unit, configured to add a source address validation SAV rule based on path information and the newly added path information, wherein the path information comprises a reachable path on which the first network device serves as a destination node.

18. The first network device according to claim 17, wherein
the transceiver unit is further configured to receive a probe packet, wherein the probe packet arrives at the first network device through a probe path on which a probe device serves as a source node and the first network device serves as a destination node, and the probe packet comprises an identifier of a network device on the probe path; and
the processing unit is further configured to obtain the path information based on the identifier of the network device on the probe path.

19. The first network device according to claim 17 or 18, wherein the processing unit is specifically configured to:
determine, based on the newly added path information, that the source node of the first packet is the second network device;
determine an association device of the first packet based on the path information, wherein a probe packet for which the association device serves as a source node arrives at the first network device after being forwarded by the second network device; and
add an SAV rule in which the second network device serves as a source prefix and an SAV rule in which the association device serves as a source prefix.

20. The first network device according to claim 19, wherein the newly added path comprises a third network device, the first network device is a next-hop node of the third network device, and the processing unit is specifically configured to:
add a first SAV rule and a second SAV rule, wherein a source prefix field of the first SAV rule indicates the second network device, a valid ingress field of the first SAV rule indicates an interface path between the third network device and the first network device, a source prefix field of the second SAV rule indicates the association device, and a valid ingress field of the second SAV rule indicates an interface path between the third network device and the first network device.

21. The first network device according to claim 17 or 18, wherein the first packet further comprises information indicating an association device of the first packet, and the processing unit is specifically configured to:
determine, based on the newly added path information, that the source node of the first packet is the second network device;
determine the association device based on the information indicating the association device of the first packet and the path information; and
add an SAV rule in which the second network device serves as a source prefix and an SAV rule in which the association device serves as a source prefix.

22. The first network device according to any one of claims 17 to 21, wherein
the transceiver unit is further configured to: send a request packet to a target device, wherein the target device is a network device indicated by a source prefix field in a newly added SAV rule, and
receive a target probe packet from the target device; and
the processing unit is further configured to age a target SAV rule based on the target probe packet, wherein a sequence number of the target SAV rule is less than a sequence number of the target probe packet.

23. The first network device according to any one of claims 17 to 22, wherein the processing unit is further configured to:
update the path information based on the newly added path information.

24. The first network device according to claim 18, wherein the probe packet is a destination prefix probe DPP packet, and the probe path is a DPP path.

25. The first network device according to any one of claims 17 to 24, wherein the newly added path information comprises an identifier of a network device on the newly added path, and the processing unit is specifically configured to:
add the source address validation SAV rule based on the identifier of the network device on the newly added path and the path information.

26. A second network device, comprising:
a transceiver unit, configured to send a first packet to a first network device, wherein the first packet arrives at the first network device through a newly added path on which the second network device serves as a source node and the first network device serves as a destination node, the first packet comprises newly added path information indicating the newly added path, the newly added path information indicates the first network device to add a source address validation SAV rule based on path information and the newly added path information, and the path information comprises a reachable path on which the first network device serves as a destination node.

27. The second network device according to claim 26, wherein the second network device further comprises:
a processing unit, configured to probe that the newly added path is added between the second network device and the first network device.

28. The second network device according to claim 26, wherein the second network device further comprises:
a processing unit, configured to send the first packet to the first network device at an interval of preset time.

29. The second network device according to any one of claims 26 to 28, wherein the second network device further comprises:
a processing unit, configured to send a probe packet to the first network device, wherein the probe packet arrives at the first network device through a probe path on which the second network device serves as a source node and the first network device serves as a destination node, the probe packet comprises an identifier of a network device on the probe path, and the probe packet is used by the first network device to obtain the path information based on the identifier of the network device on the probe path.

30. The second network device according to any one of claims 26 to 29, wherein the second network device further comprises the processing unit;
the transceiver unit is further configured to receive a request packet from the first network device; and
the processing unit is configured to send a target probe packet to the first network device based on the request packet, wherein the target probe packet is used by the first network device to age a target SAV rule based on the target probe packet, and a sequence number of the target SAV rule is less than a sequence number of the target probe packet.

31. The second network device according to claim 29, wherein the probe packet is a destination prefix probe DPP packet, and the probe path is a DPP path.

32. The second network device according to any one of claims 26 to 31, wherein the newly added path information comprises an identifier of a network device on the newly added path.

33. A network device, comprising a processor and a memory, wherein the processor is coupled to the memory;
the memory is configured to store a program; and
the processor is configured to execute the program in the memory, to enable the network device to perform the method according to any one of claims 1 to 9.

34. A network device, comprising a processor and a memory, wherein the processor is coupled to the memory;
the memory is configured to store a program; and
the processor is configured to execute the program in the memory, to enable the network device to perform the method according to any one of claims 10 to 16.

35. A computer-readable storage medium, wherein the computer-readable storage medium stores a computer program, and when the computer program is executed by a processor, the method according to any one of claims 1 to 16 is implemented.

36. A computer program product, wherein the computer program product stores computer-readable instructions, and when the computer-readable instructions are executed by a processor, the method according to any one of claims 1 to 16 is implemented.

37. A communication system, wherein the communication system comprises the first network device according to any one of claims 17 to 25 and the second network device according to any one of claims 26 to 32.
